# FASCICULE DE BREVET EUROPEEN

(11) **EP 0 612 384 B1**
(45) Date de publication et mention de la délivrance du brevet: **14.08.1996**
(21) Numéro de dépôt: 93920931.8
(22) Date de dépôt: 24.09.1993
(51) Int. Cl.: F16H 45/02, F16F 15/12

(54) **AMORTISSEUR DE TORSION POUR EMBRAYAGE DE VERROUILLAGE ET EMBRAYAGE DE VERROUILLAGE COMPORTANT UN TEL AMORTISSEUR DE TORSION**
TORSIONDÄMPFER FÜR VERRIEGELBARE KUPPLUNG UND VERRIEGELBARE KUPPLUNG MIT SO EINEM TORSIONSDÄMPFER
TORSIONAL DAMPER FOR LOCK-UP CLUTCH, AND LOCK-UP CLUTCH COMPRISING SAID TORSIONAL DAMPER

(30) Priorité: 24.09.1992 FR 9211400; 17.05.1993 FR 9305923; 16.08.1993 FR 9310004
(43) Date de publication de la demande: 31.08.1994
(73) Titulaire: VALEO, 75848 Paris Cédex 17 (FR)
(72) Inventeur: GRATON, Michel, F-75020 Paris (FR); TAUVRON, Fabrice, F-94000 Créteil (FR); BILLET, René, F-60260 Lamorlaye (FR); ARHAB, Rabah, F-93380 Perrefitte (FR); GINALDI, Michel, F-75015 Paris (FR); MAINGAUD, Daniel, F-37420 Rigny-Ussé (FR); GREAVES, Brian, Dearborn, MI 48124 (US)
(74) Mandataire: Gamonal, Didier
(86) Numéro de dépôt international: FR9300936
(87) Numéro de publication internationale: WO9407058

(56) Documents cités:
- EP-A- 0 240 166
- EP-A- 0 358 318
- EP-A- 0 480 267
- WO-A-93/13338
- DE-A- 3 934 798
- GB-A- 2 255 395

## Description

La présente invention concerne les amortisseurs de torsion pour les embrayages de verrouillage propres à intervenir entre un élément menant et un élément mené d'un appareil d'accouplement hydrocinétique, notamment pour véhicules automobiles.

Elle concerne également les embrayages de verrouillage équipés d'un tel amortisseur de torsion.

Ainsi qu'on le sait un embrayage de verrouillage, usuellement dénommé "LOCK-UP", pour appareil d'accouplement hydrocinétique intervenant entre un élément menant et un élément mené, en particulier pour véhicule automobile, comprend un amortisseur de torsion, un piston monté mobile axialement par rapport à l'élément mené, au moins une garniture de frottement associée au piston et propre à être serrée entre ledit piston et un contre-piston.

L'amortisseur de torsion comporte une partie d'entrée, une partie de sortie et des ressorts interposés circonférentiellement entre lesdites parties d'entrée et de sortie, pour accoupler celles-ci.

Un tel embrayage est décrit par exemple dans les documents US-A-4,875,562 et US-A-5,119,911.

Dans le document US-A-4,875 562, le piston est conformé pour former la partie d'entrée de l'amortisseur de torsion et porte une garniture de frottement propre à venir en contact avec la paroi transversale du boîtier de l'appareil hydrocinétique, ladite paroi formant le contre-piston.

Le boîtier forme un carter et est propre à être lié à un arbre menant.

La partie de sortie de l'amortisseur est solidaire de la roue de turbine de l'appareil hydrocinétique.

La roue de turbine est solidaire d'un moyeu propre à être liée à un arbre mené.

Ainsi le carter constitue un élément menant, tandis que le moyeu de la roue de turbine constitue un élément mené et l'embrayage de verrouillage est propre à intervenir entre le carter et la roue de turbine.

Dans ce document US-A-4,875,562 l'amortisseur de torsion comprend le piston retenant extérieurement les ressorts (ou organes élastiques), ainsi qu'une rondelle de guidage portée par le piston et retenant intérieurement les ressorts à la faveur de pattes de retenue. Le piston et la rondelle de guidage présentent des pattes d'appui pour agir sur les extrémités circonférentielles des ressorts.

La partie d'entrée comporte ainsi deux pièces, tandis que la partie de sortie comporte un voile, qui est solidaire de la roue de turbine.

Ce voile présente des pattes d'appui, qui pénètrent entre les extrémités circonférentielles de deux ressorts consécutifs pour action sur ceux-ci.

Ces pattes pénètrent radialement chacune entre deux pattes d'appui associées respectivement du piston et de la rondelle de guidage.

Fonctionnellement l'amortisseur de torsion comporte donc trois pièces.

En variante, comme mentionné dans la figure 6 de ce document US-A-4,875,562, la rondelle de guidage, solidaire du piston, retient radialement intérieurement, à la faveur de pattes de retenue, et extérieurement à la faveur d'un rebord, les ressorts, en sorte que l'amortisseur de torsion comporte fonctionnellement deux pièces, avec une rondelle de guidage périphériquement en forme de demi-coquille dotée d'une portion de maintien ou de soutien des ressorts et de portions d'appui pour les ressorts.

Néanmoins la forme de la rondelle de guidage est compliquée et est difficile à réaliser.

En outre l'espace pour les ressorts est réduit et le montage de ceux-ci n'est pas aisé.

De plus les ressorts ne sont pas bien soutenus radialement par les pattes de retenue qui offrent une portée d'appui réduite.

Pour pallier cet inconvénient, on peut songer à adopter une solution du type de celle décrite dans le document EP-A-0 358 318 dans lequel la partie d'entrée de l'amortisseur comporte deux pièces galbées en vis-à-vis conformées pour retenir les ressorts, et qui forme le préambule de la revendication 1.

Ces pièces sont disposées latéralement de part et d'autre des pattes d'appui du voile. Il en résulte que l'amortisseur de torsion comporte fonctionnellement trois pièces et que les ressorts, notamment lorsqu'ils sont longs, ne sont pas bien retenus radialement lorsqu'ils sont soumis à l'action de la force centrifuge.

La présente invention a pour objet de pallier ces inconvénients et donc de créer, de manière simple et économique, un nouvel amortisseur de torsion à nombre de pièces réduites, tout en ayant un bon soutien et un bon maintien des ressorts.

Suivant l'invention un dispositif amortisseur de torsion du type sus-indiqué, dans lequel le voile comporte des portions d'appui pour permettre un appui aux ressorts, est caractérisé en ce que le voile comporte une portion de maintien en forme de demi-coquille pour retenir radialement les ressorts, en ce que lesdites portions d'appui du voile sont portées par ladite portion de maintien, et en ce que lesdites portions de maintien de la rondelle de guidage et du voile sont décalées axialement l'une par rapport à l'autre.

Ainsi grâce à l'invention l'amortisseur de torsion comporte fonctionnellement que deux pièces et les ressorts sont bien soutenus. En effet ces ressorts sont soutenus radialement par la portion de maintien de la rondelle de guidage et par la portion de maintien du voile.

Sous l'action de la force centrifuge, les ressorts viendront en contact avec la portion de maintien de la rondelle de guidage.

La portion de maintien du voile permet de donner une certaine courbure aux ressorts.Ceux-ci travaillent donc dans d'excellentes conditions, notamment du fait que le voile et la rondelle de guidage définissent un canal profilé pour les ressorts confinés entre le voile et la rondelle de guidage. Le voile peut porter la rondelle de guidage ou vice versa.

En outre la rondelle de guidage est simplifiée puisqu'elle ne comporte plus de portion pour retenir intérieurement les ressorts. Cette rondelle est donc plus facile à réaliser.

En outre l'espace pour le montage des ressorts est plus grand, du fait notamment du décalage axial des portions de maintien du voile et de la rondelle de guidage. Le montage des ressorts est donc plus aisé et ceux-ci ne risquent pas d'être endommagés au contact de la rondelle de guidage ou du voile.

De plus, grâce à l'invention, un grand nombre d'applications sont envisageables, et il devient très aisé de former un amortisseur biface avec deux garnitures de frottement.

En effet la partie de sortie de l'amortisseur peut comporter deux éléments, à savoir, un élément de soutien des ressorts (le voile proprement dit) comportant ladite portion de maintien et un disque mobile axialement par rapport à l'élément de soutien en étant lié en rotation à celui-ci par exemple par une liaison du type tenons-mortaises.

Dans ce cas, les garnitures de frottement sont disposées de part et d'autre du disque. Ces garnitures peuvent être serrées entre un piston et un contre-piston solidaire en rotation de l'élément mené.

Le piston peut être monté mobile axialement par rapport au contre-piston en étant lié en rotation avec celui-ci. Ce piston est par exemple monté mobile sur un arbre de piston solidaire du contre-piston et l'élément de soutien présente une butée tournée vers le contre-piston, pour limiter le déplacement du disque.

Grâce à cette disposition, il est créé un amortisseur de verrouillage biface et on est sûr, lorsque l'embrayage de verrouillage est déverrouillé, que les garnitures de frottement seront convenablement libérées, c'est-à-dire que celles-ci ne viendront pas lécher le piston et le contre-piston, la butée étant implantée en conséquence.

On appréciera qu'il est possible de former un sous-ensemble comportant le piston, le contre-piston, le disque et les garnitures de frottement et qu'il est possible de monter en aveugle le reste de l'amortisseur de torsion sur le disque.

Avantageusement pour ce faire, l'arbre de piston porte une butée, tournée vers le contre-piston, pour limiter le mouvement du piston et former le sous-ensemble.

Suivant une autre caractéristique, des moyens de liaison en rotation avec mobilité axiale interviennent directement entre le piston et le contre-piston.

Ces moyens peuvent consister en des moyens de coopération de formes, le contre-piston présentant par exemple des protubérances venant s'engager dans des creux du piston. Grâce à ceux-ci le contre-piston est rigidifié.

En variante il peut s'agir de languettes tangentielles intervenant entre le piston et le contre-piston.

Dans les deux cas, ces moyens de liaison en rotation sont implantés radialement en-dessous des garnitures de frottement au voisinage de celles-ci.

Ces moyens sont implantés sur une circonférence de diamètre supérieur à celle de l'arbre de piston.

Cette disposition permet une bonne libération des garnitures de frottement et minimise les bruits.

Un bon parallélisme est donc réalisé entre le piston et le contre-piston.

L'élément de soutien précité, en forme de demi-coquille, présente dans une forme de réalisation des fentes.

Ainsi on profite des fentes pour créer des épaulements formant la butée précitée.

Ces épaulements, tournés vers le contre-piston, peuvent former l'une des extrémités de la fente ou être constitués à la faveur des pattes issues des fentes.

Bien entendu, on peut inverser les structures, la partie d'entrée de l'amortisseur comportant alors deux éléments, à savoir un élément de soutien des ressorts comportant la rondelle de guidage avec sa portion de soutien, et le disque mobile par rapport à l'élément de soutien en étant lié en rotation à celui-ci par une liaison par exemple du type tenons-mortaises.

Ces dispositions permettent de créer un nouvel embrayage de verrouillage.

En effet des moyens de liaison peuvent intervenir entre le piston et une paroi transversale du carter, lesdits moyens de liaison comportant une pièce de liaison interposée axialement entre le piston et ladite paroi transversale, ladite pièce de liaison étant solidaire de la paroi transversale du carter. Dans ce cas, le piston est propre à venir serrer les garnitures de frottement et le disque précité entre lui-même et la paroi transversale du carter.

Dans une forme de réalisation la pièce de liaison présente des ouvertures dans lesquelles s'engagent des tétons issus du piston.

Il devient possible de perfectionner ces moyens de liaison, notamment en vue de simplifier la fabrication de l'appareil d'accouplement hydrocinétique.

Dans certains cas il peut être souhaitable de rigidifier encore plus le voile, notamment pour transmission d'un couple plus important.

En effet dans ce document les portions d'appui du voile sont réalisées à la faveur de pattes issues par découpe et pliage de la portion de maintien.

Suivant une caractéristique un amortisseur de torsion du type sus-indiqué est caractérisé en ce que les portions d'appui du voile sont formées à la faveur de crevés d'appui, de forme sinueuse, s'étendant de la périphérie interne à la périphérie externe de la portion de maintien du voile.

Suivant une caractéristique un embrayage de verrouillage monté entre le carter et la roue de turbine de l'appareil d'accouplement hydrocinétique est caractérisé en ce qu'il comporte un amortisseur de torsion avec des crevés d'appui.

Grâce à ces dispositions les organes élastiques sont admis à coopérer avec la tranche des crevés en sorte que le voile permet de transmettre un couple plus important et est donc plus résistant. Il est également plus stable en fonctionnement.

En outre, ces crevés offrent une plus grande portée aux organes élastiques. Grâce à cette disposition les organes élastiques peuvent comporter plusieurs étages, certains d'entre eux étant montés à jeu circonférentiel entre deux crevés d'appui du voile.

Ces crevés favorisent également le montage de coupelles d'appui pour les organes élastiques. En variante cette disposition favorise le montage d'organes élastiques concentriques.

Il peut être également intéressant du point de vue de la fabrication de créer un ensemble unitaire imperdable, manipulable et transportable comportant l'amortisseur de torsion, la roue de turbine et le piston associé à l'amortisseur de torsion ou un ensemble comportant l'amortisseur de torsion, le piston et la coquille du carter à laquelle est reliée alors la rondelle de guidage. En variante le sous-ensemble peut comporter uniquement l'amortisseur de torsion avec son piston associé.

D'une manière générale, il est souhaitable de créer un ensemble unitaire comprenant au moins l'amortisseur de torsion.

Ainsi suivant une caractéristique de l'invention la rondelle de guidage est pourvue à sa périphérie externe d'une pluralité de clips ou pattes d'encliquetage, pour coopération avec la tranche de la périphérie externe du voile et retenue de celui-ci.

Ainsi le voile, après montage des organes élastiques, se monte par encliquetage sur la rondelle de guidage et l'on peut créer dans une première unité de production ledit sous-ensemble et assembler celui-ci en final par la suite, soit à la roue de turbine ou à son moyeu, soit au carter dans une autre unité de production.

Avantageusement la portion de soutien du voile comporte une zone arrondie à sa périphérie externe pour faciliter l'encliquetage, ledit arrondi constituant un moyen de rampe permettant de déployer aisément les pattes d'encliquetage.

Tirant profit de ces pattes, qui comportent un rebord, on peut alors interposer une rondelle de frottement entre le voile et ledit rebord. De même on peut interposer une rondelle de frottement entre un prolongement du voile et le piston pour créer de manière simple et économique un frottement au sein de l'embrayage de verrouillage. Bien entendu, au lieu d'un encliquetage, on peut verrouiller les pattes par rabattement de matière.

Suivant une autre caractéristique, la portion de maintien de la rondelle de guidage est dotée d'au moins un bourrelet pour maintien et positionnement des organes élastiques.

Ainsi lesdits organes élastiques sont très bien maintenus et ne risquent pas de se perdre lors du montage de l'amortisseur de torsion au sein de l'appareil d'accouplement hydrocinétique.

Après montage de l'amortisseur de torsion dans ledit appareil, les organes élastiques sont bien positionnés et travaillent dans d'excellentes conditions.

La rondelle de guidage peut être dotée de mortaises à sa périphérie interne, par exemple sous forme de fenêtres, pour coopération avec des tenons d'un disque appartenant à l'embrayage proprement dit.

Ainsi la partie d'entrée de l'amortisseur comporte deux pièces, à savoir, la rondelle de guidage et le disque et il est possible de créer aisément un embrayage de verrouillage biface et ce de manière simple.

La description qui va suivre illustre l'invention en regard des dessins annexés dans lesquels :
- la figure 1 est une vue en coupe axiale d'un appareil hydrocinétique doté de l'embrayage de verrouillage selon l'invention ;
- la figure 2 est une demi-vue agrandie de l'appareil hydrocinétique de la figure 1 ;
- les figures 3 et 4 sont des vues en coupe axiale décalées circonférentiellement montrant l'embrayage de verrouillage selon l'invention ;
- la figure 5 est une vue en élévation de l'élément d'entrée de l'amortisseur de torsion ;
- la figure 6 est une vue en élévation de l'élément de soutien selon l'invention ;
- la figure 7 est une vue en coupe selon la ligne 7-7 de la figure 6 ;
- les figures 8 et 9 sont des vues à plus grande échelle des parties repérées par les encarts 8 et 9 de la figure 7 ;
- la figure 10 est une vue en élévation du piston selon l'invention ;
- la figure 11 est une vue en coupe selon la ligne 11-11 de la figure 10 ;
- la figure 12 est une vue partielle en coupe selon la ligne 12-12 de la figure 10 ;
- la figure 13 est une vue en élévation du contre-piston selon l'invention ;
- la figure 14 est une vue en coupe selon la ligne 14-14 de la figure 13 ;
- la figure 15 est une vue partielle en coupe selon la ligne 15-15 de la figure 14.
- la figure 16 est une demi-vue analogue à la figure 2 pour une autre variante de réalisation ;
- la figure 17 est une vue en coupe partielle selon la ligne 17-17 de la figure 5 ;
- les figures 18 à 21 sont des vues analogues aux figures 3 à 4 pour d'autres variantes de réalisation ;
- la figure 22 est une vue en coupe selon la ligne 22-22 de la figure 25 de l'amortisseur de torsion selon l'invention ;
- la figure 23 montre à échelle supérieure la partie basse de la figure 22 ;
- la figure 24 montre à échelle supérieure la partie haute de la figure 22 ;
- la figure 25 est une vue partiellement coupée selon la flèche 25 de la figure 22 ;
- la figure 26 est une vue selon la flèche 26 de la figure 22 ;
- la figure 27 est une vue à plus grande échelle de l'encart 27 de la figure 25 ;
- la figure 28 est une vue selon la flèche 28 de la figure 25 ;
- la figure 29 est une vue analogue à la figure 23 pour un autre exemple de réalisation ;
- la figure 30 est une vue partielle selon la flèche 30 de la figure 29 ;
- les figures 31 et 32 sont des vues partielles analogues à la figure 24 pour d'autres exemples de réalisation ;
- la figure 33 est un diagramme montrant la courbe caractéristique de l'amortisseur de torsion selon les figures 22 à 28 ;
- la figure 34 est une vue partielle en coupe selon la ligne 34-34 de la figure 37, pour un autre exemple de réalisation ;
- la figure 35 est une vue partielle de la rondelle de guidage de l'amortisseur de torsion de la figure 34 ;
- la figure 36 est une vue selon la flèche 36 de la figure 35 ;
- la figure 37 est une vue partiellement coupée selon la flèche 37 de la figure 33 ;
- la figure 38 est une vue en coupe selon la ligne 34-34 de la figure 37 montrant à échelle réduite la partie basse de cette coupe ;
- la figure 39 est une vue en coupe axiale analogue à la figure 22 pour encore un autre exemple de réalisation ;
- la figure 40 est une vue selon la flèche 40 de la figure 39 ;
- la figure 41 est une vue selon la flèche 41 de la figure 39 avec arrachement local pour montrer le piston ;
- la figure 42 est une vue partielle en coupe montrant les moyens d'engrènement à jeu intervenant entre le piston et une bague de poussée ;
- la figure 43 est une vue partielle analogue à la figure 42 pour encore un autre exemple de réalisation.
- la figure 44 est une vue partielle en coupe axiale d'un appareil d'accouplement hydrocinétique selon l'invention ;
- la figure 45 est une vue partielle en coupe transversale montrant l'un des emboutis du piston ;
- la figure 46 est une vue partielle montrant une encoche, de liaison en rotation avec le disque, formée dans la rondelle de guidage ;
- la figure 47 est une vue partielle de la pièce de liaison selon la flèche 47 de la figure 44 ;
- la figure 48 est une vue partielle du piston selon la flèche 48 de la figure 44 ;
- la figure 49 est une vue partielle montrant des pattes d'agrafage avant pliage pour attelage de la rondelle de guidage au voile selon une seconde réalisation ;
- la figure 50 est une vue en coupe partielle selon la ligne 50-50 de la figure 49 ;
- la figure 51 est une vue partielle montrant une variante pour les appuis des ressorts.

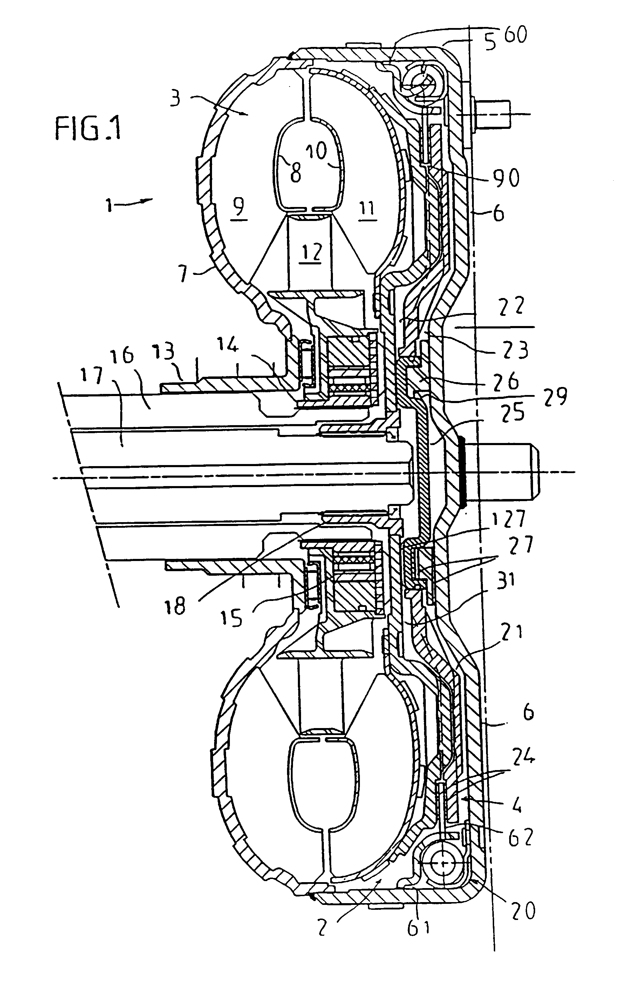

Dans les figures illustrées l'embrayage de verrouillage 4 est monté dans un appareil d'accouplement hydrocinétique 1. Cet appareil 1 (figure 1) comporte, agencés dans un même boîtier étanche 2 formant carter d'huile, un convertisseur de couple 3 et un embrayage de verrouillage 4.

Le carter 2 forme un élément menant et est propre à être lié en rotation au vilebrequin du moteur à combustion interne du véhicule automobile. Ce carter 2 annulaire est composé d'une première coquille 5, comportant une paroi transversale annulaire 6, et d'une deuxième coquille 7 faisant face à la première coquille 5 et conformée de façon à définir une roue d'impulseur 8 à aubes 9. Les aubes 9 de cette roue 8 sont solidaires de la face interne de la coquille 7. Les coquilles 5,7 sont raccordées, ici par soudage, l'une à l'autre de façon étanche à leur périphérie externe et la paroi 6 porte centralement un centreur et périphériquement des parties filetées pour sa liaison en rotation audit vilebrequin.

Le reste du convertisseur de couple comprend une roue de turbine 10 munie d'aubes 11 faisant face aux aubes 9 et une roue de réacteur 12.

Cette roue 10 est liée en rotation à un arbre mené 17 en étant solidaire ici d'un moyeu central 18 accouplé à l'arbre mené 17, tandis que la roue de réacteur 12 est reliée à un manchon 14 avec intervention d'une roue libre 15. Le manchon 14 est solidaire en rotation d'un arbre fixe 16 (ou manchon de réaction) par un montage à cannelures.

L'arbre 16 est creusé centralement pour passage de l'arbre mené interne 17, lui-même centralement creux pour ici passage d'huile. Cet arbre 17 est solidaire en rotation par un montage à cannelures du moyeu 18 à alésage interne cannelé pour ce faire.

Ce moyeu 18 constitue un élément mené et appartient à l'embrayage de verrouillage 4 en formant l'élément de sortie de celui-ci. La coquille 7 présente un manchon 13 enfilé sur l'arbre 16. Cet embrayage 4 est disposé entre la paroi 6 et la roue de turbine 10.

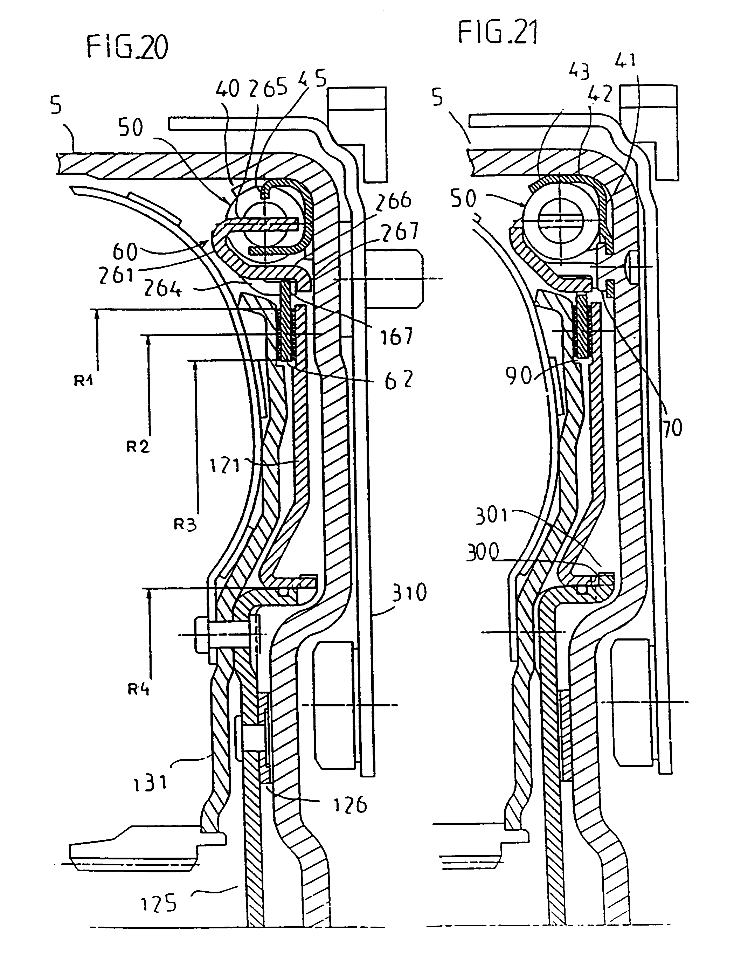

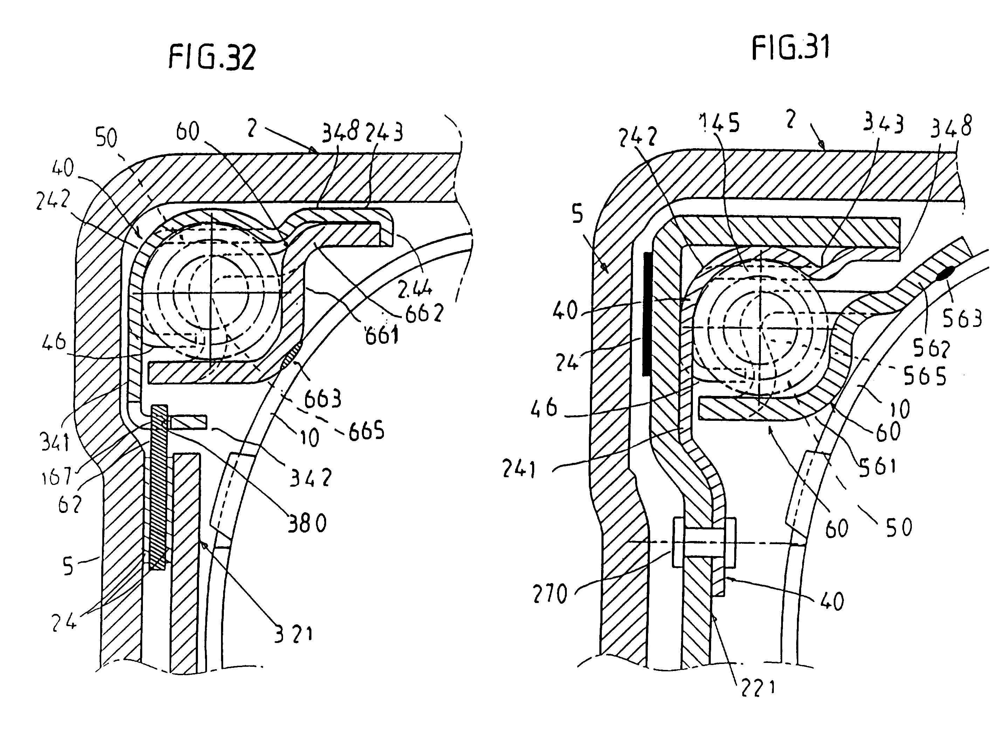

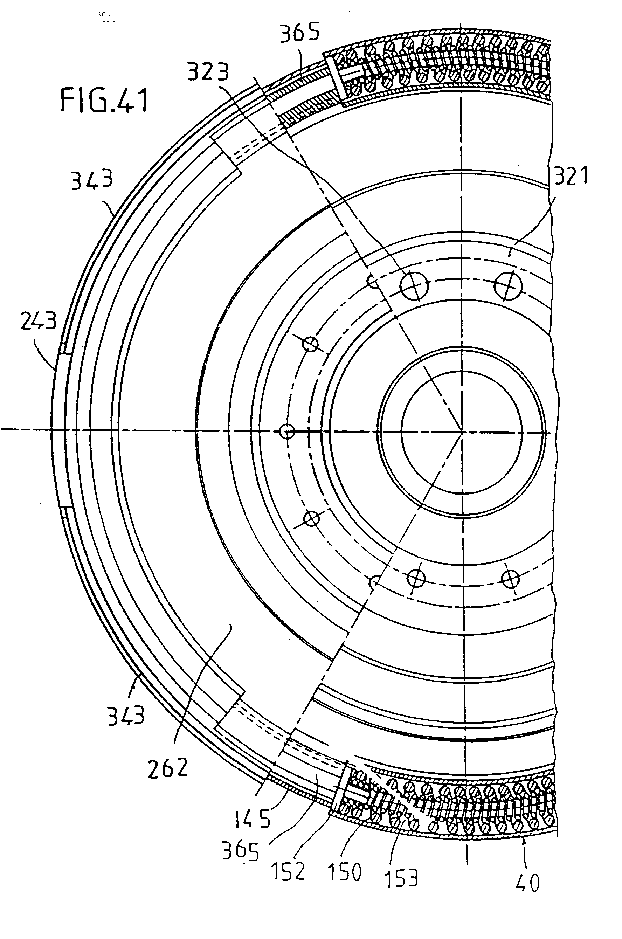

L'embrayage 4 comporte un amortisseur de torsion 20, un piston 21 monté mobile par rapport à l'élément mené 18, et au moins une garniture de frottement 24 associée au piston 21 et propre à être serrée, entre ledit piston 21 et un contre-piston 31,5 formé par une pièce solidaire de la roue de turbine (figures 1 à 21, figure 34), ou une pièce solidaire de la coquille 5 (figures 21 à 30,35 à 41), ou la coquille 5 - la paroi 6 de celle-ci - (figures 31,32,42,43,44).

L'amortisseur de torsion 20 comporte une partie d'entrée 40, une partie de sortie 60 et des ressorts 50 interposés circonférentiellement entre lesdites parties d'entrée et de sortie pour accoupler celles-ci. Cet amortisseur est implanté à la périphérie externe du boîtier 2.

Plus précisément l'amortisseur de torsion 20 comporte deux parties coaxiales 40,50 montées mobiles l'une par rapport à l'autre à l'encontre de ressorts à action circonférentielle 50, à savoir, une partie d'entrée dotée d'une rondelle de guidage 40 et une partie de sortie 60 dotée d'un voile 60. La rondelle de guidage comporte une portion de maintien 41,42... en forme de demi-coquille et des portions d'appui 45,145... pour respectivement maintenir, ici extérieurement, les ressorts 50 et permettre leur appui, tandis que le voile comporte également des portions d'appui 65,165 pour permettre un appui aux ressorts 50. La rondelle de guidage 40 entoure au moins en majeure partie le voile 60.

Suivant l'invention un amortisseur de torsion du type sus-indiqué, est caractérisé en ce que le voile 60 comporte une portion de maintien 61,161,261... en forme de demi-coquille, pour maintenir radialement les ressorts, en ce que les portions d'appui 65,165 du voile 60 sont portées par ladite portion de maintien du voile et en ce que lesdites portions de maintien 42,142...- 61,161,261... de la rondelle de guidage 40 et du voile 60 sont décalées axialement l'une par rapport à l'autre.

Plus précisément, dans toutes les figures, des chambres de fluide 22,23 sont formées de part et d'autre du piston 21.

Pour mémoire on rappellera que dans tous les cas la roue de turbine 10 est entraînée par la roue d'impulseur 8 grâce à la circulation de fluide contenue dans le boîtier 2 et que, après démarrage du véhicule, l'embrayage de verrouillage 4 permet, pour éviter les phénomènes de glissement entre les roues 8,10, une solidarisation de l'arbre mené avec l'arbre menant, autrement dit une solidarisation en rotation par frottement de l'élément menant 2 avec l'élément mené 18.

En effet, lorsque sous l'effet de la pression hydraulique de commande, le piston 21 vient serrer la garniture de frottement 24 entre celui-ci et le contre-piston 31, le verrouillage qui en résulte permet un entraînement direct de l'arbre 17, tel que l'arbre d'entrée de la boite de vitesses, par le carter 2 lié en rotation au vilebrequin du moteur.

Suivant une caractéristique, un embrayage de verrouillage du type sus-indiqué, est caractérisé en ce que la partie d'entrée 40 de l'amortisseur de torsion 20 est propre à être solidarisée à l'élément menant 2, en ce que la partie de sortie 60 comporte deux éléments, à savoir, un élément de soutien 61 (le voile proprement dit) des ressorts 50 comportant la portion de maintien et un disque 62 mobile axialement par rapport à l'élément de soutien 61 en étant lié en rotation à celui-ci, en ce que des garnitures de frottement 24 sont disposées de part et d'autre dudit disque 62, en ce que lesdites garnitures de frottement 24 sont propres à être serrées entre le piston 21 et le contre-piston 31 solidaire en rotation de l'élément mené 18, en ce que le piston 21 est monté mobile axialement par rapport au contre-piston 31 en étant lié en rotation avec celui-ci, en ce que ledit piston 21 est monté mobile sur un arbre de piston 25 solidaire du contre-piston 31 et en ce que l'élément de soutien 61 présente une butée 67, tournée vers le contre-piston 31, pour limiter le déplacement du disque 62.

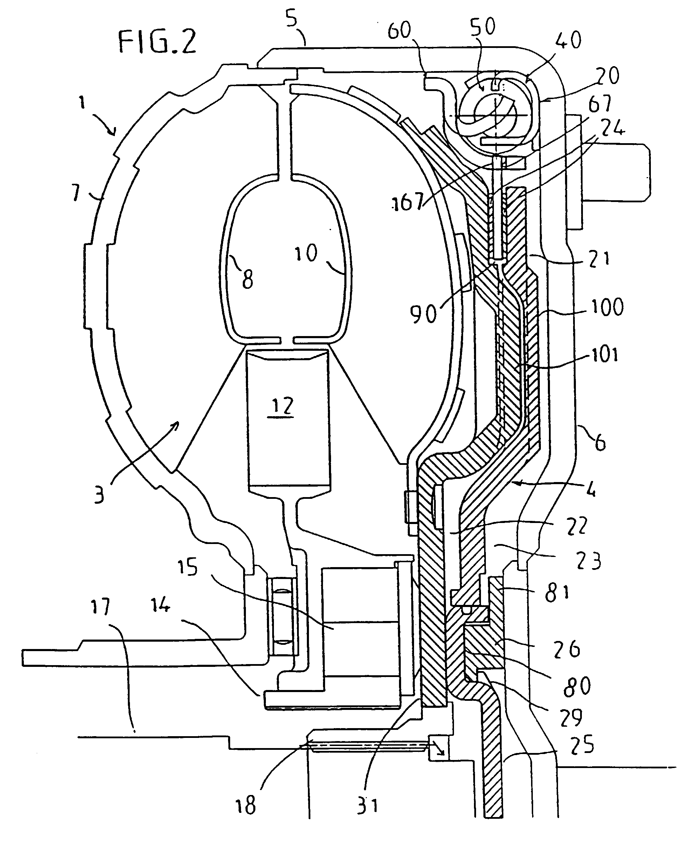

Dans les figures 1 et 2, les garnitures de frottement 24 sont collées sur le disque 62 de part et d'autre de celui-ci. Ces garnitures sont logées dans une cavité 90 délimitée par le piston 21 et le contre-piston 31. Cette cavité 90 est formée à la périphérie externe du piston 21 et présente deux faces transversales parallèles, formées respectivement sur le piston 21 et le contre-piston 31, pour contact avec les garnitures de frottement 24. Le disque 62 avec ses garnitures 24 pénètre à l'intérieur de cette cavité 90 ouverte radialement vers l'extérieur en direction de la périphérie externe de la coquille 5 (le rebord axial de celle-ci).

En variante les garnitures 24 peuvent être collées respectivement sur le piston 21 et le contre-piston 31, le disque 62 étant intercalé entre celles-ci.

Le contre-piston 31 présente des emboutis 101 propres à coopérer avec des creux complémentaires 100 formés dans le piston 21. Les emboutis 101 et creux 100 sont disposés au voisinage des garnitures 24, radialement en-dessous de celles-ci, en étant implantés sur une circonférence moyenne de diamètre supérieur à celle de l'arbre de piston 25.

Cette disposition permet de diminuer le mouvement relatif circonférentiel du piston 21 par rapport au contre-piston 31, ainsi que les bruits qui résultent de ce mouvement.

En effet les emboutis 101 pénètrent à jeu de montage dans les creux 100 en sorte que, lorsque l'on effectue cette liaison radialement plus vers l'intérieur, on augmente le débattement circonférentiel du piston 21 par rapport au contre-piston 31 et donc on augmente les bruits.

Le piston 21 est ainsi monté mobile axialement par rapport au contre-piston 31 en étant lié en rotation à celui-ci par coopération de formes.

Ici trois emboutis 101 et trois creux 100 sont prévus répartis régulièrement circulairement. Plus précisément les emboutis 101 et les creux 100 sont obtenus par découpage ou cisaillage non traversant de la matière, le piston 21 et le contre-piston 31 étant en tôle. A l'aide d'un outil, on découpe (ou cisaille) la matière sans aller jusqu'au bout.

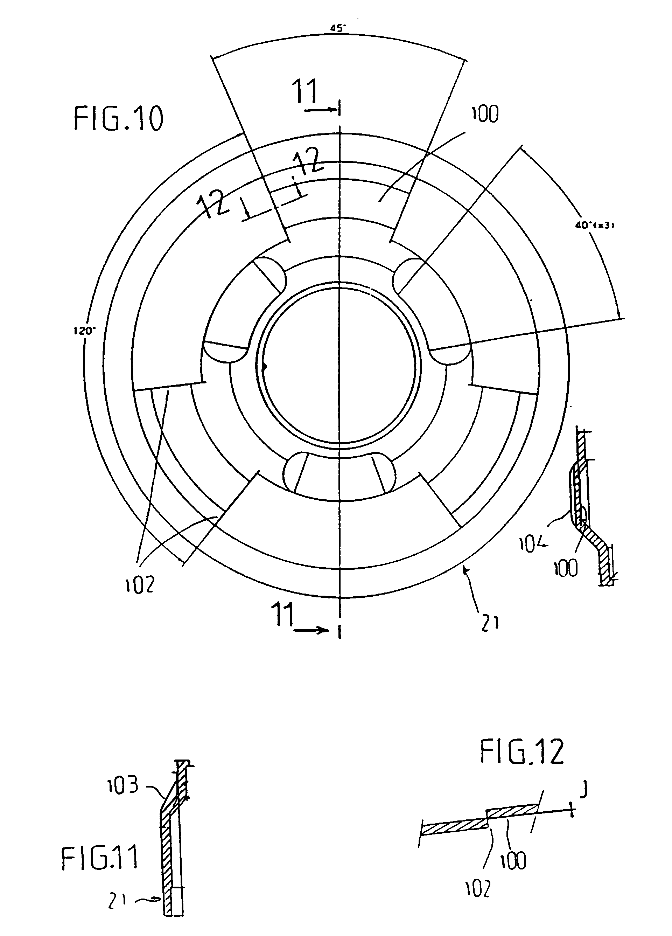

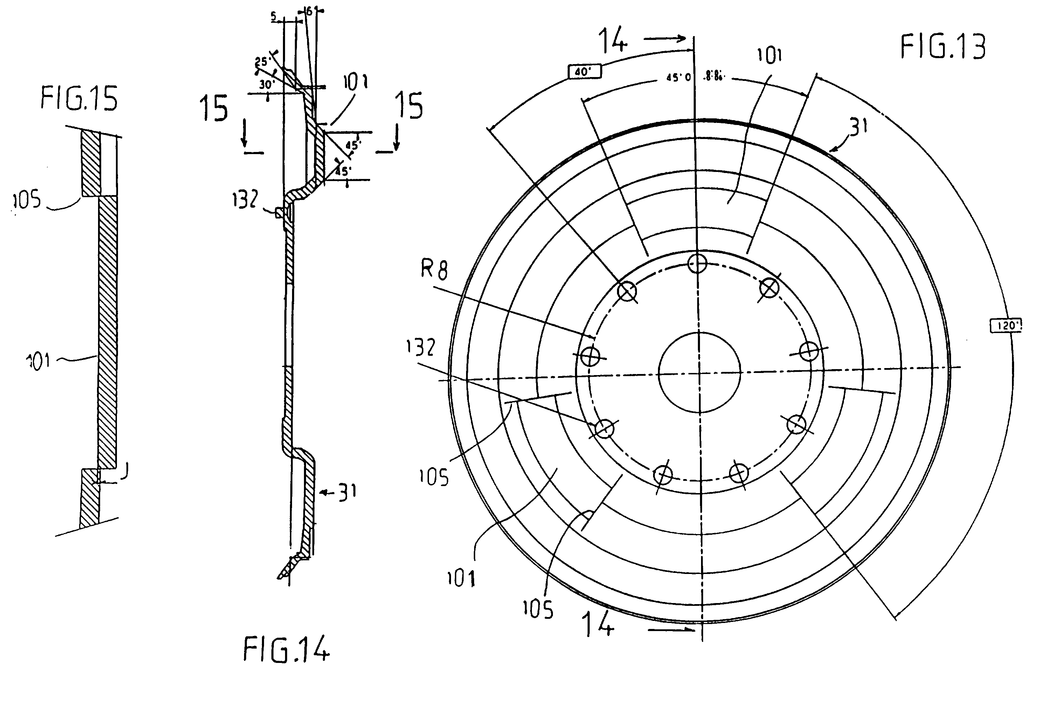

Ainsi dans les figures 12 et 13 on voit en J l'épaisseur de matière restant après découpage. Cette présence de matière permet de conserver l'étanchéité du piston 21 et du contre-piston 31. En outre ce découpage conduit à repousser la matière vers l'extérieur et donc à créer des emboutis. Ainsi l'embouti 101 rentre dans le creux associé 100 et l'on procède à un usinage du piston 21 après formation du creux 100, et donc corollairement d'un embouti, afin que ledit embouti ne vienne en contact de la paroi 6. Cet usinage consiste en un enlèvement de matière visible en 104 (figure 11), le fond du creux 100 étant de faible épaisseur. Ainsi on réduit l'encombrement axial de l'embrayage de verrouillage.

On appréciera que l'outil et le découpage non traversant conduisent à l'apparition de bord droit 102,105 (figures 10 à 15) parallèles délimitant circonférentiellement respectivement les emboutis 101 et les creux 100. Lors du mouvement axial du piston 21 par rapport au contre-piston 31, les bords 105 coulissent le long des bords 102 à faible jeu de montage. Ce coulissement se fait de manière précise grâce à la bonne précision géométrique des bords 102,105, les emboutis 101 et creux 100 ayant, en section, une forme trapézoïdale complémentaire avec des arrondis.

On appréciera que les emboutis 101, formant protubérances, rigidifient le contre-piston 31. De même la formation des creux 100 par découpage non traversant conduit à la formation d'emboutis et à ridifier le piston 21. Ce contre-piston 31 est fixé à sa périphérie externe, ici par soudage, à la roue de turbine 10.

A sa périphérie interne ce contre-piston 31 est fixé par rivetage, en variante par soudage, à ladite roue 10. Les rivets 132 sont venus pour ce faire du contre-piston 31, en étant formés par emboutissage local. Ils sont implantés sur une circonférence de rayon R8 en-dessous des emboutis 101 (figure 13).

Le contre-piston 31 est solidaire à sa périphérie interne du moyeu 18 (l'élément mené) ici par sertissage en variante par soudage.

Le piston 21 est monté mobile axialement sur l'arbre de piston 25. Cet arbre 25 présente un rebord périphérique 80 en forme de gouttière permettant le logement d'une bague de poussée 26. Cette bague 26 est propre à venir en contact avec la paroi 6 et présente radialement un rebord périphérique externe 81 permettant de limiter le déplacement du piston 21 pour éviter tout contact entre la paroi 6 et le piston 21. Le rebord 81 fait saillie radialement par rapport à l'arbre 25.

Un joint d'étanchéité est prévu entre l'alésage interne du piston 21 et la périphérie externe de l'arbre de piston 25.

La bague 26 présente, sur chacune de ses faces, des rainures 27 permettant une circulation de fluide entre les chambres 22,23. De même l'arbre 25 présente des rainures 127 de communication, sur sa face tournée vers le contre-piston 31, pour accès à la chambre 22. Ces rainures 127 sont pratiquées dans le rebord périphérique 80.

On notera qu'un jeu radial existe entre la périphérie externe de la bague 26 et la gouttière 80 de l'arbre 25. La bague 26 forme une bague de frottement, ici en aluminium, et est sertie en 29 sur l'arbre de piston 25. Cette bague 26 a deux fonctions, à savoir une fonction de cale d'épaisseur et une fonction de butée.

Ainsi il est possible de former un sous-ensemble contre-piston 31, roue de turbine 10, puis de monter le disque 62 revêtu de garnitures de friction 24, de monter ensuite le piston et l'arbre de piston, puis de sertir (en 29) la bague 26 sur l'arbre 25 et souder, ici par soudage laser, l'arbre 25 sur le contre-piston 31. Indépendamment on fixe la partie d'entrée de l'amortisseur 20 sur la coquille 5, on monte les ressorts 50 puis l'élément de soutien 61 et enfin on monte en aveugle le sous-ensemble amortisseur 20, coquille 5 sur le disque 62, la coquille 5 venant coiffer la coquille 7.

On appréciera que le rebord 81 implanté axialement, entre la paroi 6 et la gouttière 80 en faisant saillie radialement par rapport à celle-ci, permet de limiter le débattement du piston 21 avant montage de la paroi 6 portant la majeure partie de l'amortisseur 20.

Il est ainsi formé un ensemble manipulable et transportable comprenant le piston 21, le contre-piston 31 et le disque 62 et on peut monter en aveugle le reste de l'amortisseur 20 sur le disque 62.

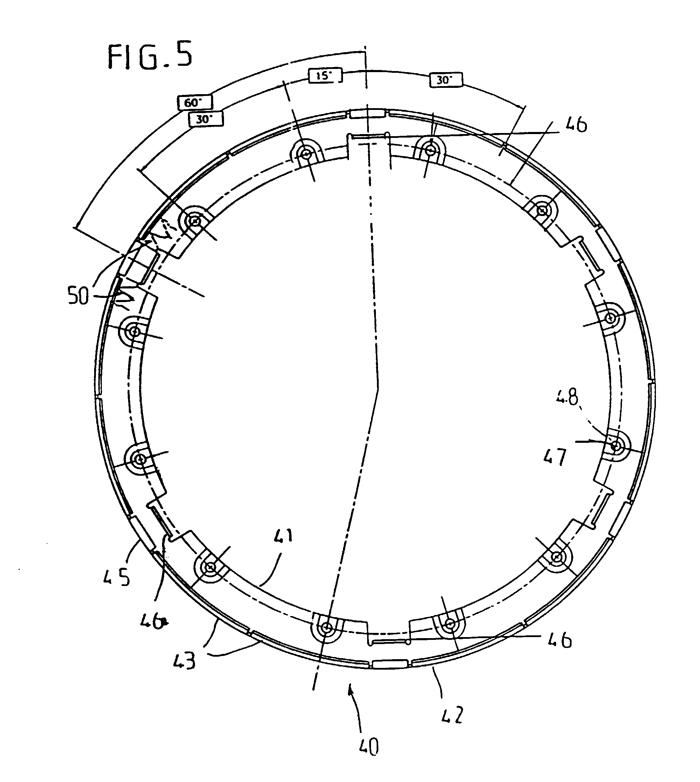

Plus précisément la partie d'entrée de l'amortisseur comporte une rondelle de guidage 40, ici unique, avec une partie transversale 41 dotée de trous 47 formés à la faveur d'emboutis 48 locaux décalés axialement en direction de la paroi 6 pour contact avec celle-ci (figure 5), pour fixation par rivetage sur la paroi 6. A cet effet, la paroi 6 est déformée localement pour formation de rivets 70 d'un seul tenant avec la paroi 6. La fixation par rivetage est donc effectuée de manière étanche, les trous 47 étant enfilés sur les rivets 70 en forme de tétons avant déformation.

La paroi 41 se prolonge par une paroi annulaire 42 entourant et enveloppant les ressorts 50 de grande longueur. La paroi 42 comporte, en section, une partie courbe en arc de cercle et une partie d'orientation axiale. La paroi 42 épouse la périphérie interne de la coquille 5 et est dirigée vers la roue 10 et a une extrémité libre 43 rabattue.

Grâce à ceci, les ressorts (ou organes élastiques) 50 sont retenus et maintenus axialement et radialement extérieurement par la rondelle de guidage 40, ici en tôle emboutie, qui est ainsi en forme de demi-coquille annulaire, les ressorts s'appuyant localement sur la paroi 41 et sur la partie axiale de la paroi 42 (figures 1 à 4).

La rondelle de guidage 40 présente donc une portion de soutien et de maintien 41,42 pour les ressorts 50, ainsi que des portions d'appui 45,46, ici sous forme de pattes décrites ci-après, pour appui des ressorts 50.

Plus précisément la paroi 42 est interrompue localement entre les deux extrémités circonférentielles de deux ressorts 50 consécutifs pour formation, par découpe et pliage, de pattes d'appui 45 dirigées radialement vers l'intérieur pour appui circonférentiel des extrémités des ressorts 50. De même la paroi 41 est interrompue localement entre deux ressorts 50 consécutifs pour formation, par découpe et pliage, de pattes d'appui 46 axiales permettant un appui des extrémités des ressorts 50. Les pattes 45,46 sont en vis-à-vis (figure 5).

Ainsi ces ressorts 50 prennent appui circonférentiellement extérieurement sur les pattes 45 et intérieurement sur les pattes 46, en sorte que les extrémités circonférentielles des ressorts 50 sont bien maintenues.

A la figure 5 on a représenté partiellement les extrémités circonférentielles de deux ressorts consécutifs.

La partie de sortie 60 comporte un élément de soutien 61 en forme de demi-coquille, ici en tôle emboutie. Cette coquille 61 de forme annulaire, à section circulaire, présente à sa périphérie externe un rebord d'orientation axiale de rigidification 68 et à sa périphérie interne un bord d'orientation axiale 66. Le rebord 68 est décalé axialement pa rapport à la paroi 42 avec apparition d'une fente.

La coquille 61 est interrompue localement par des fentes 64 et maintient radialement intérieurement les ressorts 50 dans une position courbée.

Plus particulièrement, des pattes d'appui 65 sont issues par découpe et pliage de la coquille 61 avec formation d'une fente 64. Cette fente 64 est fermée et un épaulement radial 67, tourné vers le contre-piston 31, est formé à l'extrémité axiale concernée de la fente 64 au niveau de la zone de raccordement de la partie courbe de la pièce 61 avec le rebord 66.

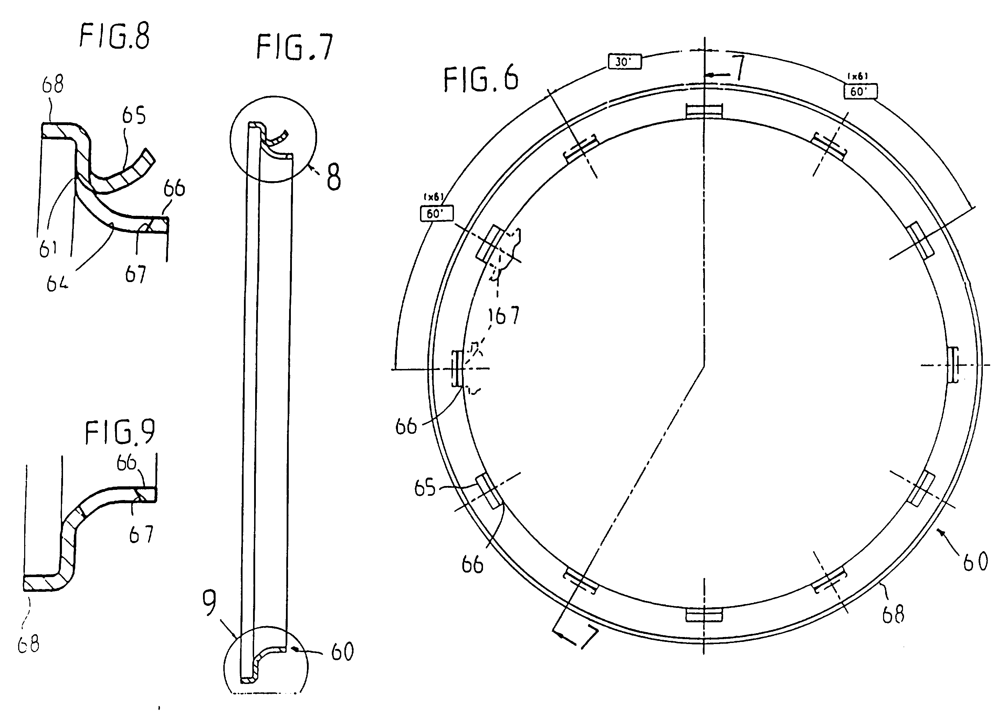

La patte 65 est relevée (figure 8) et a une forme courbe. Elle permet un appui, radialement entre les pattes 45,46, des extrémités circonférentielles des ressorts 50. La demi-coquille 61 permet de retenir radialement intérieurement les ressorts 50 et elle est montée par pincement de ses pattes 65 entre deux ressorts 50. Ces ressorts 50 épousent donc la forme de la coquille 61 et sont ainsi courbés. Le voile 60 présente donc une portion de soutien et de maintien 61 des ressorts 50, ainsi que des portions d'appui 65, ici sous forme de pattes, pour les ressorts. Les portions d'appui 65 sont portées par la portion de maintien.

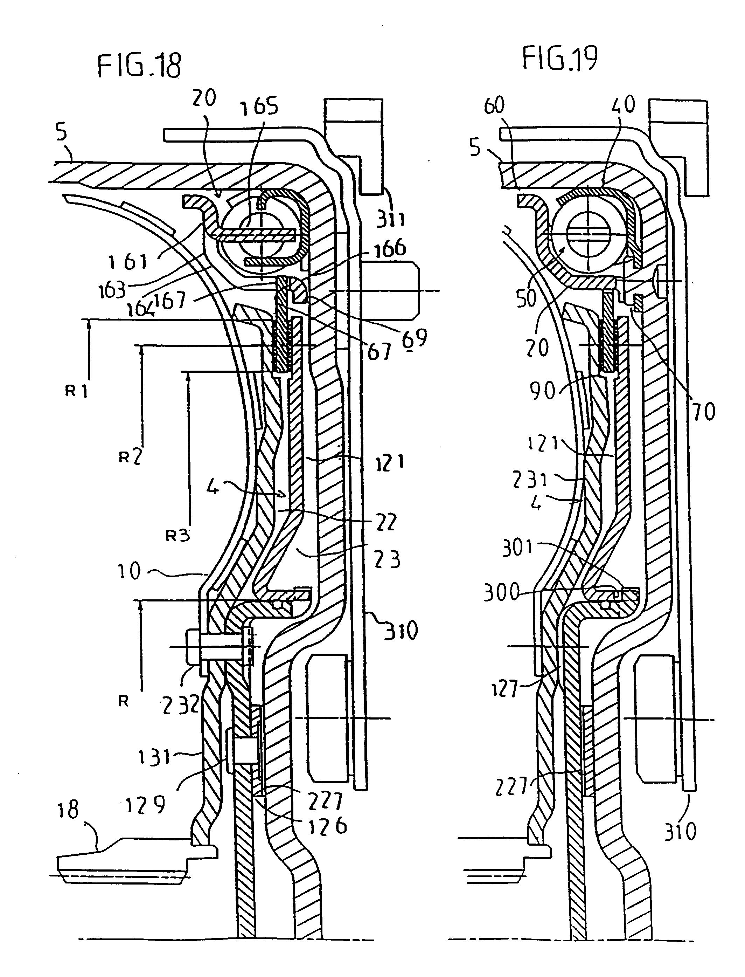

On notera que les parties courbes profilées - ici en arc de cercle - des portions de maintien de la rondelle de guidage 40 et du voile 60 s'étendent globalement de part et d'autre de l'axe de symétrie radial des ressorts (voir figures 1 à 4). Il en est de même dans les figures 18 à 24,29,34,38,41,44 décrites ci-après et également les figures 31,32 dans lesquelles la portion de maintien est prolongée circonférentiellement au-delà dudit axe radial.

Le disque 62 présente à sa périphérie externe des tenons 167 pour venir s'engager de manière complémentaire dans les fentes 64 de la coquille 61.

Ainsi le disque 62 d'orientation transversale est lié en rotation à l'élément de soutien 61 avec mobilité axiale par coopération de formes, la liaison étant du type tenon-mortaise.

On appréciera que la forme courbe de la demi-coquille 61 permet un engagement des tenons ou pattes 167 dans les fentes 64, les pattes 65 étant tournées vers la rondelle 40 et la paroi 6.

Ici six ressorts 50, répartis régulièrement circulairement, sont prévus, ainsi que six paires de pattes 45,46 (figure 5) et six pattes 65 (figure 6).

Entre deux pattes 65 consécutives, on prévoit une fente fermée 64 supplémentaire, délimitant un épaulement 67, obtenue par découpe (figure 9) sans formation de pattes 65. Ainsi on peut augmenter le nombre de tenons 167, dont deux sont représentés de manière schématique à la figure 6. Ainsi on double le nombre de tenons 167 ici au nombre de douze. Un bon entraînement du disque 62 est ainsi obtenu, ainsi qu'une bonne transmission de couple.

Les fentes 64 sont délimitées circonférentiellement par deux bords parallèles et l'opération de tranchage de la tôle, avec ou sans formation de pattes 65, conduit à la formation d'un épaulement 67 incliné (figures 8 et 9). On obtient ainsi une bonne précision géométrique desdits bords, ainsi qu'une bonne localisation des épaulements 67 ponctuels.

On notera que les ressorts 50 sont ainsi emprisonnés entre deux demi-coquilles 40,60, se faisant face, selon un axe de symétrie incliné par rapport à l'axe radial de symétrie des ressorts 50, et donc à concavité, dirigées en sens inverse. Le nombre de pièces de l'amortisseur est ainsi réduit tout en ayant un bon soutien desdits ressorts qui épousent la forme des demi-coquilles 40,60, la rondelle 40 étant implantée radialement au-dessus de l'élément 60 au moins en majeure partie dans toutes les figures.

Les portions de maintien et de soutien 61,41-42 du voile 60 et de la rondelle de guidage 40 sont donc décalées axialement l'une par rapport à l'autre.

Tout ceci facilite le montage par enfilage d'une partie de l'amortisseur 20 solidaire du boîtier 2 sur le disque 62.

En fonctionnement, lorsque la pression qui règne dans la chambre 23 est supérieure à la pression qui règne dans la chambre 22, le piston 21 vient serrer les garnitures 24 entre celui-ci et le contre-piston 31 et l'embrayage est verrouillé. En inversant les pressions dans les chambres 22,23 on peut libérer le piston 21, c'est-à-dire déplacer celui-ci en direction de la paroi 6, afin de déverrouiller les garnitures 24 et libérer celles-ci. Lors du mouvement axial du piston 21 en direction du carter 6, le mouvement des garnitures 24 est limité par coopération des tenons 167 avec les épaulements 67 formant la butée selon une caractéristique de l'invention.

On obtient un fonctionnnement irréprochable de l'embrayage de verrouillage avec une bonne transmission de couple entre le disque 62 et le moyeu 18 du fait de la présence du piston 21 et du contre-piston 31.

On notera que les rainures 27,127 permettent une inversion de pression dans les chambres 22,23 et que la profondeur des creux 100 et des emboutis 101 dépend du mouvement de recul du piston 21 pour avoir en permanence une liaison en rotation entre le piston 21 et le contre-piston 31.

On appréciera que cette disposition permet de rigidifier la roue de turbine et que l'amortisseur de torsion est implanté en majeure partie à la périphérie externe de la coquille 5 radialement au-dessus du piston 21 dans l'espace disponible à ce niveau.

On obtient ainsi un bon parallélisme entre le piston 21 et le contre-piston 31 ainsi qu'une bonne libération des garnitures 24.

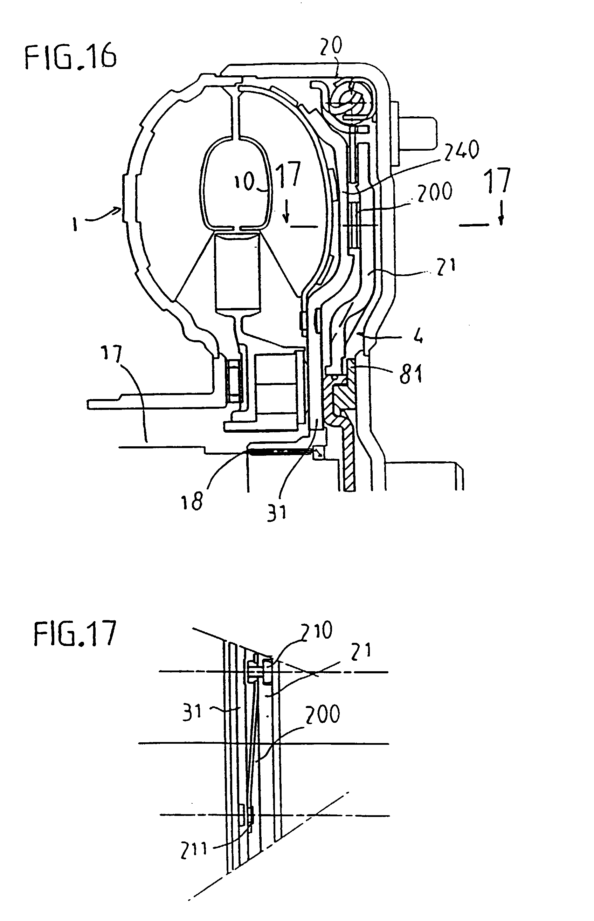

Bien entendu la liaison en rotation, entre le piston 21 et le contre-piston 31, peut être réalisée à l'aide de languettes tangentielles 200 (figures 16 et 17), implantées radialement en-dessous du disque 62 au voisinage de celui-ci. Pour ce faire, le contre-piston 31 a, au niveau des languettes 200, une épaisseur réduite rendue possible par le fait qu'il est fixé à sa périphérie interne et externe à la roue de turbine 10. L'encombrement axial est ainsi réduit.

Dans ce cas, une extrémité circonférentielle de chaque languette 200 est fixée par rivetage en 211 au contre-piston 31, les rivets 211 étant formés par déformation locale au contre-piston 31.

L'autre extrémité circonférentielle des languettes 200 est fixée par boulonnage 210 au piston 21.

Il est ainsi possible de former un sous-ensemble roue de turbine 10, contre-piston 31, moyeu 18 puis de venir monter sur celui-ci le piston 21 en fixant celui-ci à l'aide des boulons 210 sur les languettes 200 montées par avance sur le contre-piston 31.

Bien entendu auparavant on vient monter le disque 62 avec ses garnitures de frottement 24.

En variante (figures 18,19 à 21), l'arbre de piston 125 peut être fixé par rivetage sur le contre-piston 131au lieu de l'être par soudage.

Avantageusement les rivets 232 solidarisent ensemble l'arbre de piston 125 et le contre-piston 13lavec la roue de turbine 10.

Dans ce cas, la bague 126 est fixée par des rivets 129 auparavant sur l'arbre 125, la bague 126 présentant sur ses deux faces des rainures 227 pour permettre le passage de l'huile et une inversion de pression dans les chambres 22 et 23. Bien entendu le contre-piston 31 et l'arbre 125 sont emboutis pour logement de la tête des rivets 129.

Dans ce cas, le piston 121 est lié en rotation au contre-piston 131 indirectement par l'arbre 125 et par coopération de formes.

Plus précisément la périphérie interne du piston 121 a une forme tubulaire dans laquelle sont formées des mortaises 300, l'arbre 125 présentant de manière complémentaire des tenons 301 d'orientation radiale.

L'arbre 125, par coopération des tenons 301 avec le fond des mortaises 300, limite ainsi le mouvement du piston 121 en empêchant que celui-ci vienne au contact de la paroi 6 comme précédemment. La bague 126 a ainsi une fonction de cale d'épaisseur, tandis que les tenons 301 forment des butées tournées vers le contre-piston 131 pour limiter le mouvement du piston 121 et formation d'un sous-ensemble.

Dans la réalisation des figures 18 et 19, les pattes 165 de la demi-coquille 161 de soutien et de maintien de la courbure des ressorts 50 sont modifiées et elles s'étendent globalement axialement en étant implantées centralement par rapport aux ressorts 50 qui trouvent ainsi un bon appui sur les pattes 165.

On notera également la présence d'un rebord radial 69 de rigidification du bord axial 166 délimitant axialement la fente 164.

Dans les figures 20 et 21, l'élément de soutien 261 est modifié et possède une partie ou portion de maintien en forme de demi-coquille à la périphérie externe de laquelle s'étendent des pattes 265 d'orientation axiale dirigées vers la paroi 6. C'est sur les pattes 265 que prennent appui les extrémités circonférentielles des ressorts.

Les fentes 264 pratiquées dans la demi-coquille 261 sont ouvertes axialement et la limitation du débattement du disque 62 est réalisée à l'aide des pattes 266 relevées formées à la faveur des fentes 264. Lesdites pattes s'étendent entre les ressorts 50, comme les pattes 265, et sont prolongées à leur extrémité libre par un rebord 267 d'orientation radiale formant un épaulement pour limiter le débattement axial du disque 62 par coopération des tenons ou pattes 167 de celui-ci avec les rebords 267 constituant la butée tournée vers le contre-piston 131 selon l'invention.

Bien entendu, on peut prévoir des fentes supplémentaires 264 pour l'entraînement en rotation des teons 167.

On notera que dans les figures 18 à 21, la présence d'une pièce 310 permettant la fixation du boîtier 2 sur le vilebrequin, ladite pièce portant une couronne de démarreur 311.

Ainsi qu'il ressort à l'évidence de la description et des dessins, la liaison en rotation, directement (figures 1 à 17) et indirectement par l'intermédiaire de l'arbre de piston (figures 18 à 21), du piston avec le contre-piston est réalisée sur une circonférence de diamètre supérieur à celle sur laquelle a lieu la fixation de l'arbre de piston au contre-piston.

Tout ceci permet d'avoir un bon coulissement du piston guidé par l'arbre de piston solidaire du contre-piston.

La rondelle de guidage 40 peut être fragmentée du fait qu'elle est fixée par rivetage.

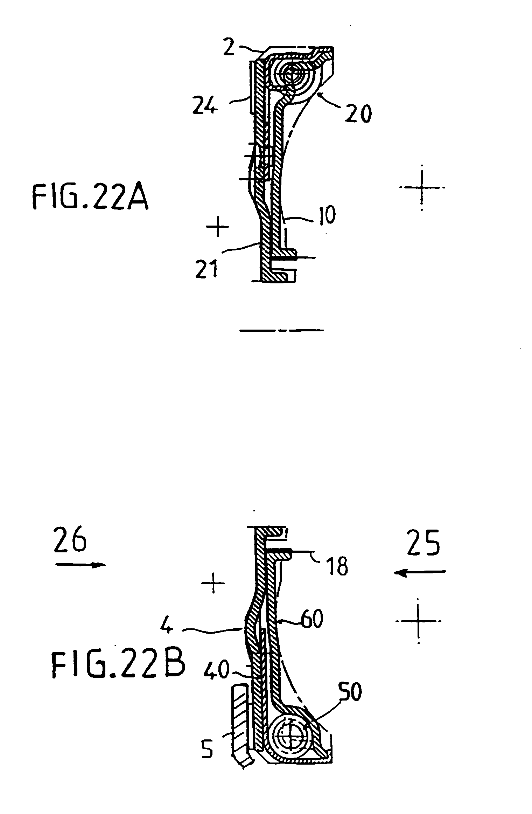

Dans la figure 22 l'amortisseur de torsion 20 comporte une partie d'entrée 40 destinée à être reliée en rotation au carter 2 et plus précisément à la première coquille 5 de celui-ci, une partie de sortie 60 destinée à être reliée en rotation à la roue de turbine 10 et des organes élastiques ou ressorts 50 à action circonférentielle intervenant entre les deuxdites parties 40,50. L'amortisseur 20 intervient donc entre les pièces 5 et 10 comme dans les figures précédentes.

Plus précisément les parties d'entrée 40 et de sortie 60 sont montées de manière coaxiale en étant mobiles l'une par rapport à l'autre circonférentiellement à l'encontre des organes élastiques 50. Elles ont comme dans les figures 1 à 21 une forme annulaire.

La partie d'entrée 40 forme dans les figures 22 à 28 une rondelle de guidage 40, tandis que la deuxième partie ou élément de sortie 60 forme le voile. Ces parties 40,60 sont métalliques.

La rondelle de guidage 40 (figures 22 à 28) comporte une portion de maintien et de soutien 42 et des portions d'appui 145 pour respectivement maintenir extérieurement les organes élastiques 50 et permettre leur appui, tandis que le voile 60 comporte également une portion de maintien et de soutien 361 et des portions d'appui 365 pour respectivement maintenir intérieurement les organes élastiques 50 et permettre leur appui.

Suivant une caractéristique (figures 22 à 50) un amortisseur de torsion du type sus-indiqué est caractérisé en ce que les portions d'appui 365 du voile sont formées à la faveur de crevés, de forme sinueuse, s'étendant de la périphérie interne à la périphérie externe de la portion de maintien 361 du voile 60.

Dans les figures 22 à 28, la rondelle de guidage 40 comporte un flasque transversal 41 accolé à la face du piston 21 tournée vers le voile 60, à l'opposé de la coquille 5. Ce flasque 41 est relié par rivetage au piston 21 ici métallique. Le piston 21 comporte des portions extrudées 170 traversant pour ce faire des ouvertures 47 pratiquées dans la portion 41.

Ensuite la tête des portions 170 est écrasée, en sorte que les rivets sont issus directement du piston 21. La rondelle de guidage 40, est donc reliée de manière débrayable au carter 2 par l'intermédiaire du piston 21, qui est ici de forme lisse, la coquille 5 portant transversalement à fixation à sa périphérie externe une garniture de frottement annulaire 24 pour coopération à frottement avec la périphérie externe du piston 21, globalement d'orientation transversale et formation d'un embrayage, dont le piston est calé en rotation sur le moyeu 18 via l'amortisseur de torsion 20 de manière décrite ci-après.

Le flasque 41 est prolongé à sa périphérie externe par la portion annulaire de maintien et de soutien 42 des ressorts.

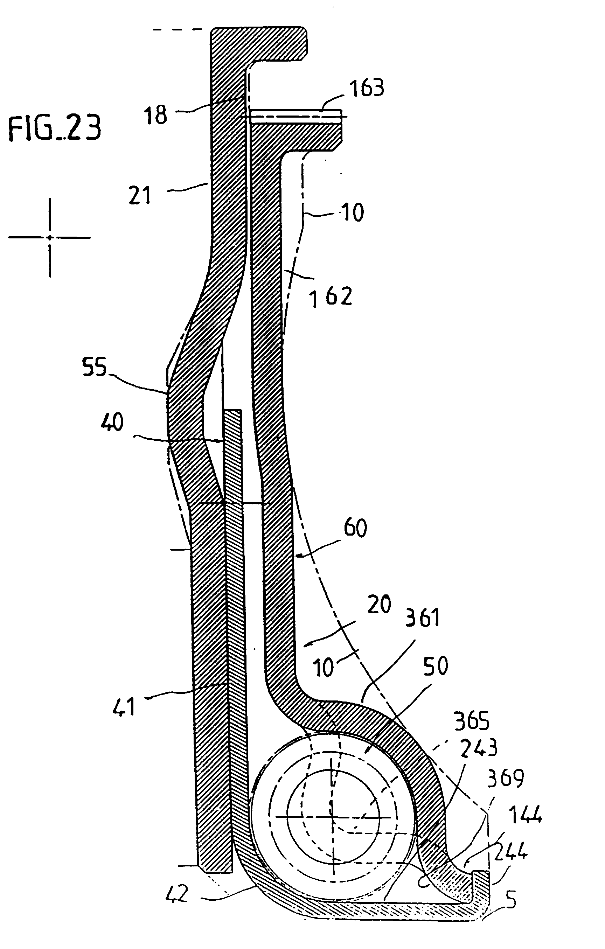

Cette portion (figure 23) forme une demi-coquille 42 et retient extérieurement les organes élastiques 50, notamment à l'encontre de la force centrifuge. Elle épouse la forme du ressort 50.

La portion 42 a donc en section une partie de forme arrondie, qui se raccorde à sa périphérie interne au flasque 41 et se prolonge à sa périphérie externe par un rebord annulaire 143 d'orientation axiale.

On notera que c'est surtout la portion arrondie 42 qui retient les ressorts 50 et qu'elle épouse la forme de ceux-ci. Il en est de même de la portion de maintien 361.

Le voile 60 métallique comporte d'un seul tenant la portion annulaire de maintien et de soutien 361, qui est prolongée vers l'axe de l'ensemble à sa périphérie interne par un flasque 162, globalement d'orientation transversale, doté à sa périphérie interne d'un moyeu pourvu de dentures 163 pour sa liaison en rotation avec le moyeu 18 à dentures externes de la figure 1.

Le flasque 162 s'étend donc parallèlement au piston 21 et est destiné à être relié à la roue de turbine 10 via son moyeu 18.

La portion de maintien 361 a une forme également de demi-coquille et retient intérieurement les organes élastiques 50. Les portions de maintien 42,361 se font face selon un axe de symétrie incliné par rapport à l'axe radial de symétrie des ressorts 50 et ont donc une forme annulaire. Elles soutiennent les organes 50 tant intérieurement qu'extérieurement. La rondelle de guidage 40 entoure le voile 60.

La portion 361 se raccorde à sa périphérie interne au flasque 162 par une zone arrondie et à sa périphérie externe par une zone arrondie périphérique à un rebord annulaire 368 d'orientation axiale.

Le rebord 368 rigidifie la portion 361 de même que le rebord 143 rigidifie la portion 42. En outre, le rebord 143 permet un guidage du voile 60 via son rebord 368. Le rebord 368 est localement entaillé au niveau de pattes d'encliquetage 243 décrites ci-après. Il est ainsi formé un rebord périphérique d'orientation axiale 144 plus court que le rebord 368. La portion de maintien 361 comporte donc à sa périphérie externe deux profils 144 et 368 dirigés axialement à l'opposé du piston 21.

La portion 361 est interrompue localement par les crevés d'appui 365. Ces appuis 365 comportent une portion d'orientation axiale s'étendant radialement en-dessous du rebord 143 et se raccordant au rebord 368 par une zone arrondie 369.

Intérieurement la portion d'orientation axiale du crevé 365 se raccorde par un arrondi à une portion inclinée, elle-même se raccordant par un arrondi à la périphérie interne de la portion 361.

La rondelle de guidage métallique est interrompue également localement par deux séries de pattes 46,145 parallèles formant des appuis pour les organes élastiques 50. Les pattes 46,145 forment donc des portions d'appui pour les extrémités circonférentielles des ressorts 50.

Les pattes 145 sont formées par déformation de matière vers l'intérieur et s'étendent radialement vers l'intérieur par rapport au rebord 143 périphérique externe, en étant d'orientation axiale.

Ainsi une partie du rebord 143 et de la portion 42 est défoncée vers l'intérieur pour formation des pattes d'appui 145 et ce sans cisaillement de la tôle. En variante la déformation de matière vers l'intérieur peut conduire à un cisaillement de celle-ci et à la formation de crevés. Les pattes 145 sont donc issues de la portion de maintien 142.

Les pattes d'appui 46 sont réalisées par découpe et pliage de la partie transversale 41. Ces pattes 46 s'étendent axialement sur une faible longueur en-dessous des pattes 145 radialement dans l'alignement de celles-ci et des crevés 365.

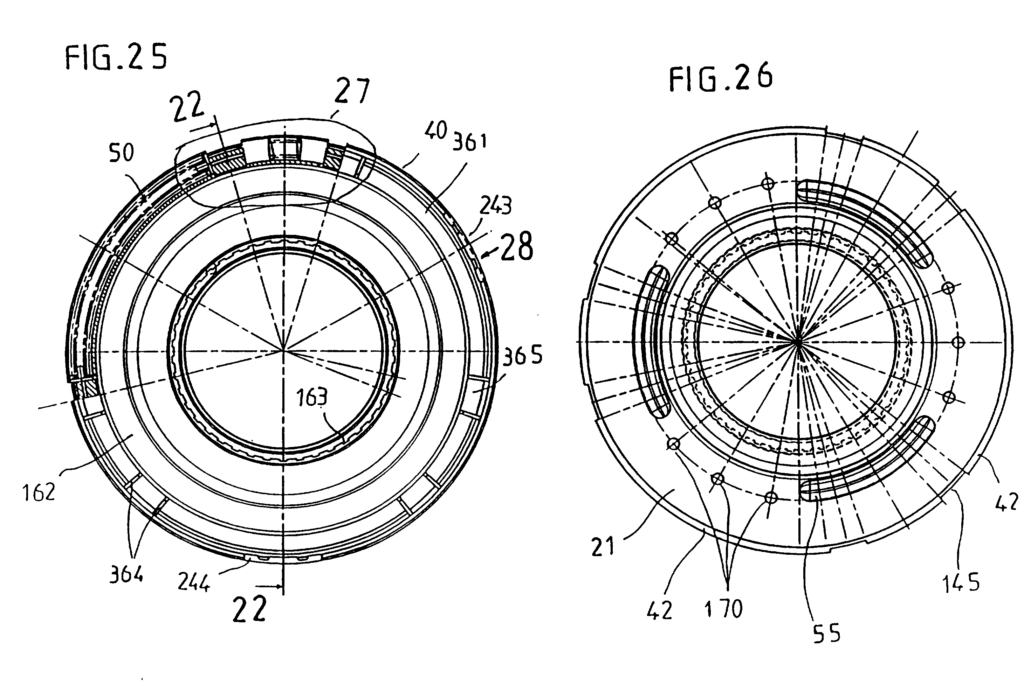

La rondelle de guidage 40 a donc globalement en section une forme en U au niveau des pattes 145,46, dont l'une 46 des branches est plus courte que l'autre, avec formation d'une fenêtre en-dessous de la patte 46 (figure 25).

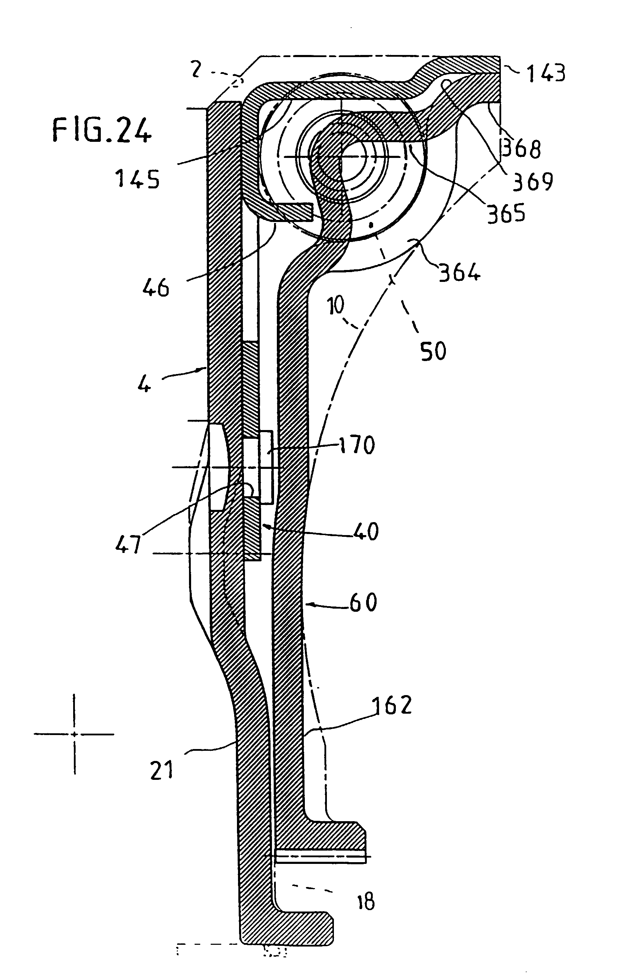

Ainsi les pattes 145 se raccordent par un arrondi au rebord axial 143 de la rondelle 40. Les pattes 145 s'étendent au-dessus de la portion axiale des crevés 365, parallèlement à celle-ci. Ainsi les appuis 365 s'étendent, par leur partie axiale, radialement au-dessus de l'axe de symétrie axial des organes élastiques 50 et par leur partie inclinée interceptent l'axe de symétrie radial desdits organes élastiques (figure 24).

Ces parties inclinées sont donc obliques par rapport à l'axe de symétrie radial des organes élastiques 50. Il en est de même dans toutes les figures.

Les parties inclinées sont penchées en direction du flasque 41 et du piston 21 en allant de la périphérie interne de la portion 361 à la partie axiale du crevé 365 pour augmentation de la longueur des pattes 46 et de ladite partie axiale du crevé.

Ainsi les crevés 365 ont par rapport à leur axe de symétrie en section globalement la forme d'un V à sommet arrondi.

Bien entendu en variante on peut incliner également les parties axiales des crevés selon les applications. Cela revient à ouvrir plus ou moins le V.

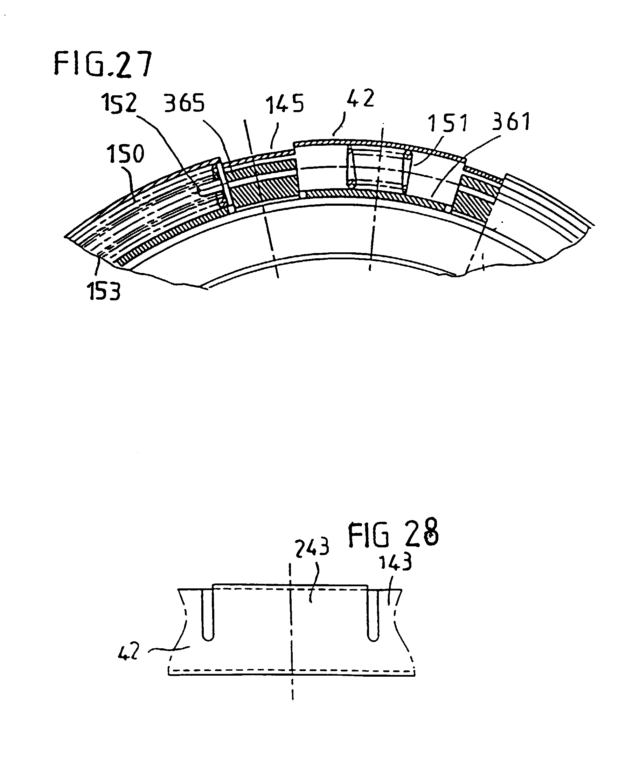

Ici les organes élastiques consistent en deux séries de ressorts à boudin 150,153-151. Les ressorts 150,153 de la première série sont montés concentriquement l'un à l'intérieur de l'autre et s'appuient à chacune de leur extrémité circonférentielle sur des coupelles d'appui 152 (figure 27) présentant un nez pénétrant à l'intérieur desdits ressorts internes 153.

Ces coupelles 152 sont propres à s'appuyer sur la tranche des pattes 46,145 et des crevés d'appui 365.

Ainsi qu'on l'aura compris, la forme sinueuse des crevés 365 permet de donner une longueur maximum aux pattes 46.

Les coupelles 152 sont donc soutenues radialement intérieurement par les pattes 46 et radialement extérieurement par les pattes 145 parallèles aux pattes 46.

Centralement les coupelles 152 sont soutenues par les crevés sinueux 365.

Ainsi le voile est robuste et les surfaces d'appui qu'offrent les pattes 46,145 et les crevés 365 aux ressorts 150,153, via les coupelles 152, sont maximales.

Suivant une autre caractéristique, tirant parti de ces appuis 46,145 et 365, il devient possible de monter un ressort 151 flottant entre deux séries d'appui 145,46,365 consécutives.

Ces ressorts 151 appartiennent à la deuxième série précitée et alternent donc circonférentiellement avec les ressorts 150,153. Les ressorts 151 sont plus courts que les ressorts 150,153, en étant plus raides. Les ressorts 150,153-151 sont maintenus par les portions de maintien 42,361.

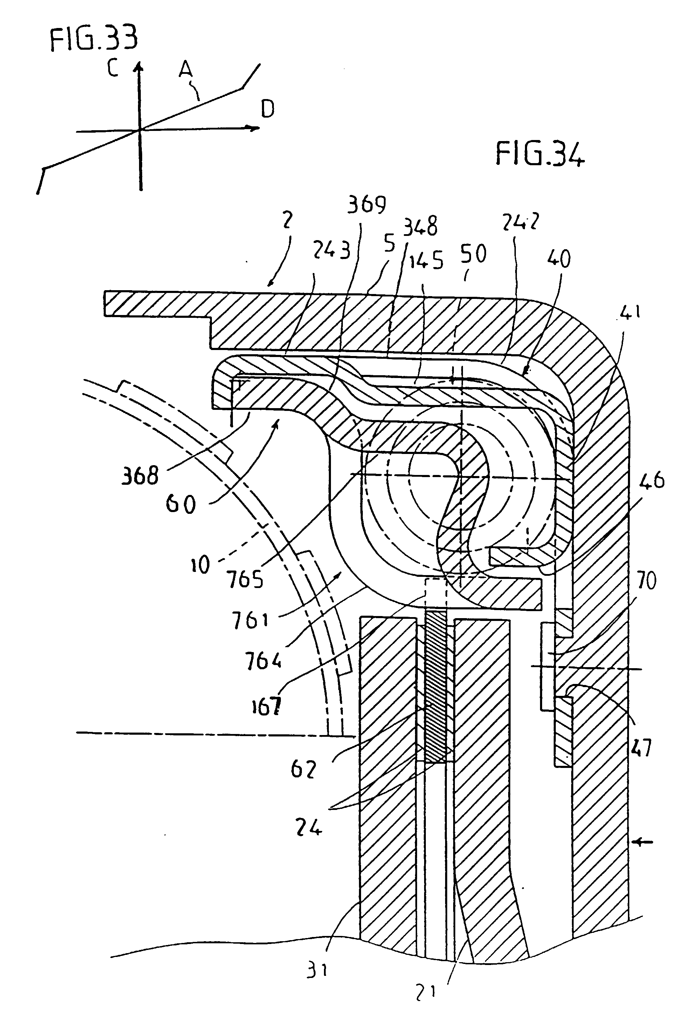

La courbe caractéristique A de l'amortisseur est représentée à la figure 33, (dans laquelle on a représenté en C le couple transmis et en D le déplacement angulaire relatif entre les parties d'entrée 40 et de sortie 60), et présente une double pente.

Ainsi dans une première phase seuls les ressorts 150,153 interviennent puis dans une seconde phase, après rattrapage des jeux, les ressorts 151 font sentir leurs effets et sont comprimés.

Avantageusement selon une caractéristique les ressorts 150,153 sont précintrés car ils ont une grande longueur circonférentielle.

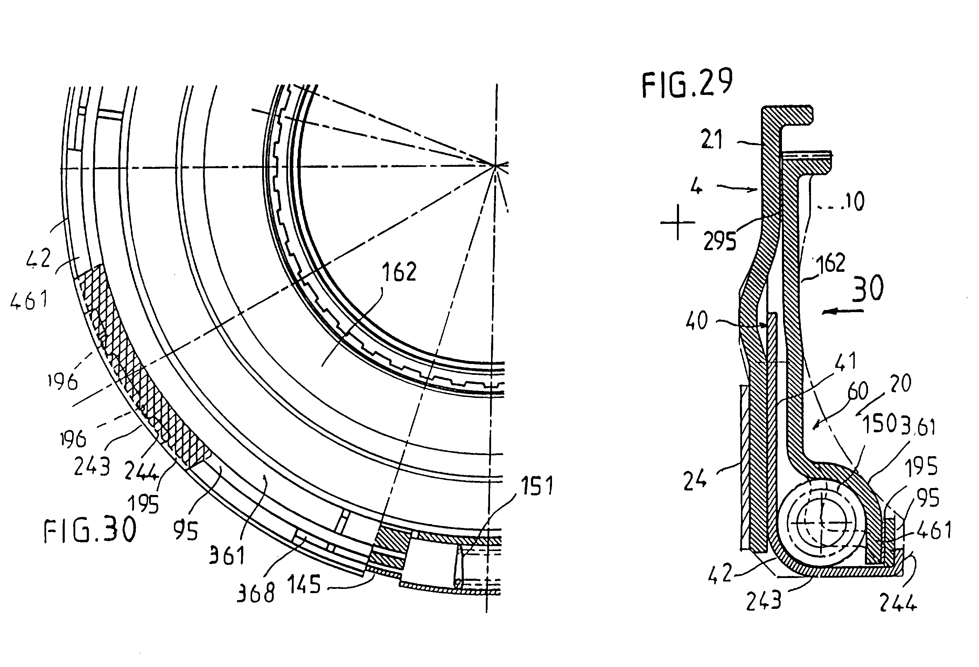

Selon une autre caractéristique le rebord 143 de la portion de maintien 42 est interrompu localement à la faveur de fentes borgnes (figure 28), pour formation de pattes d'encliquetage 243 ayant un rebord transversal d'extrémité 244 dirigé vers l'axe de l'ensemble.

Les pattes 243 sont ici pleines. En variante on peut ménager dans celles-ci des fenêtres pour améliorer leur souplesse.

Le rebord 244 est de dimension telle, qu'il est propre à coopérer, par venue en butée, avec la tranche du rebord périphérique 144 du voile 60.

Circonférentiellement le rebord entaillé 144 a une longueur telle que la patte puisse se débattre angulairement à l'intérieur de ce rebord lors du mouvement angulaire relatif entre le voile 60 et la rondelle 40.

Les pattes 243, grâce à leur rebord 244, retiennent donc le voile 60 en sorte qu'il est possible de créer, après montage des ressorts 150,153-151 et des coupelles 152, par encliquetage du voile 60 dans les pattes 243, un sous-ensemble unitaire imperdable, manipulable et transportable comportant le piston 21 et l'amortisseur de torsion 20.En final on enfile ce sous-ensemble sur le moyeu 18. On appréciera que le montage du voile 60 avec la rondelle 40 par encliquetage est facilité du fait que cette rondelle 40 est moins épaisse que le voile 60 en sorte que les pattes 243 se soulèvent aisément lors de l'encliquetage du voile 60.

On appréciera que la zone arrondie 369 du voile 60 facilite le soulèvement ou déploiement des pattes 243. Cette zone 369 constitue donc une rampe permettant de soulever les pattes 243 lors du rapprochement relatif de la rondelle de guidage 40 par rapport au voile 60.

Après montage final du sous-ensemble un léger jeu existe entre le rebord 244 et la tranche du rebord 144.

On notera que le piston 21 comporte des nervures de rigidification 55.

Ici six pattes 145 et donc six crevés 365 et six pattes 46 sont prévues, ainsi que trois ressorts 150 et trois ressorts 151.

La disposition est régulière comme montré dans les figures 25 et 26.

Bien entendu tout cela dépend des applications. Bien entendu on peut tirer parti de la création des pattes d'encliquetage 243,244 pour venir coincer axialement une rondelle 95 entre le rebord 244 et la périphérie externe de la portion de soutien 361 (figures 29 et 30).

Dans ce cas la périphérie externe 461 de l'élément de maintien ou de soutien 361 est en majeure partie d'orientation transversale au niveau des ressorts 150, seule une faible partie du rebord 368 est conservée au voisinage des crevés d'appui.

La rondelle 95 porte localement au niveau de chaque patte 243 une garniture de friction 195 fixée à ladite rondelle 95 par exemple par collage. La garniture 195 est propre à frotter contre la portion 461.

La garniture 195 est plus large circonférentiellement que la patte 243 pour une bonne application de la garniture 195 contre la portion 461.

Bien entendu on peut inverser les structures et coller la garniture 195 sur la portion 461.

De même on peut interposer une garniture de frottement annulaire 295 entre le flasque 162 et le piston 21, de préférence à la périphérie interne de ceux-ci (figure 29). Dans ce cas, le flasque 162 constitue un élément élastique par rapport au piston 21 rigidifié par les nervures 55. Il est ainsi possible de serrer aisément élastiquement la garniture 295 entre le piston 21 et le flasque 162.

Ainsi lors du débattement angulaire relatif, entre le voile 60 et le piston 21 solidaire de la rondelle de guidage 40, un frottement intervient entre la garniture 295, solidarisée à l'un des éléments 162,21, et l'autre des éléments 21,162 non solidaire de la garniture. Un autre frottement intervient entre les garnitures 195 et la partie 461 de l'élément de soutien 361.

On notera qu'ici la garniture de frottement 24 est solidaire du piston 21. Bien entendu cela dépend des applications.

On notera également que les pattes d'encliquetage 243 permettent de bloquer en rotation la rondelle 95. En effet, cette rondelle présente, en saillie vers l'extérieur, des pattes radiales pour support des garnitures 195 (figure 30). Ces pattes sont surplombées par les pattes 243, en sorte que par coopération de formes on obtient un blocage en rotation de la rondelle 95, par ailleurs bloquée axialement entre le rebord 244 et la partie 461 de l'élément de soutien 361.

On notera (figure 30) que la rondelle 95 passe en-dessous du rebord 368. Dans cette réalisation (figure 30) on entaille le rebord 244, ici en deux endroits référencés en 196 à la figure 16, afin de pouvoir soulever les pattes 243 à l'aide d'un outil pour permettre le montage par encliquetage du voile et de la rondelle 95 avec la rondelle de guidage 40 équipée des ressorts 150 et du piston 21.

Bien entendu la présente invention n'est pas limitée à l'exemple de réalisation décrit. En particulier on peut simplifier le voile 60 et supprimer son flasque.

Ainsi à la figure 31 la partie globalement transversale 241 de la rondelle de guidage 40, accolée au piston 221, est fixée par des rivets 270 au piston 221 portant la garniture de frottement 24. Ce piston présente à sa périphérie externe un rebord annulaire d'orientation axiale au contact duquel vient la portion de maintien 242 de la rondelle 40.

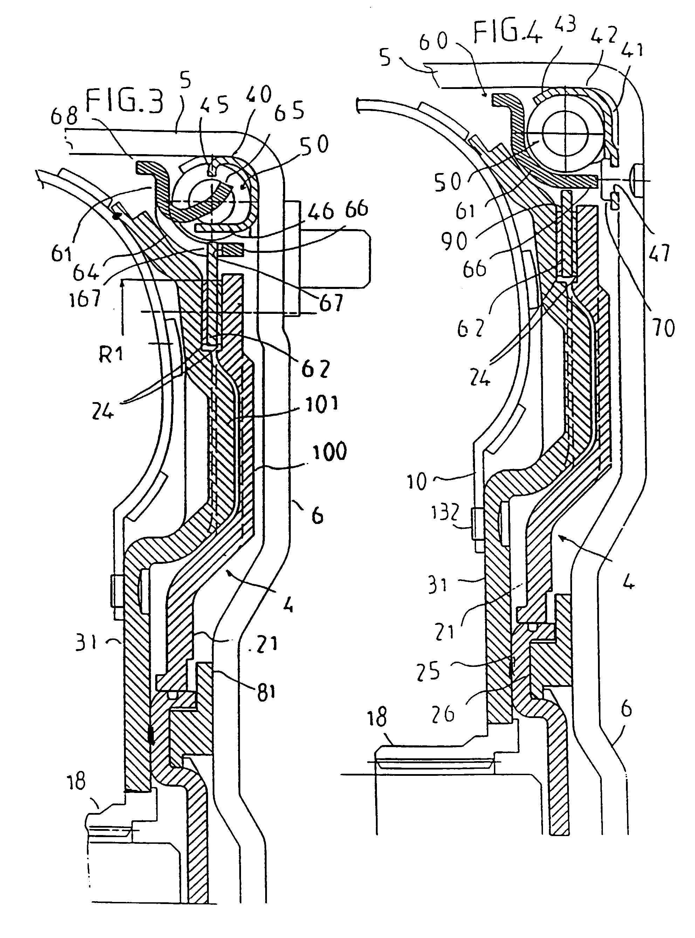

On notera que la portion 242 a en section une forme circulaire, avec un arc de cercle s'étendant sur plus de 90° et que la disposition est l'inverse de celle de la figure 3, les ressorts venant localement au contact du voile 60. La portion 242 s'étend au-delà de l'axe de symétrie radial des ressorts (figure 31).

Le piston 221 appartient à l'embrayage de verrouillage et est propre à serrer la garniture de frottement 24 entre celui-ci et la coquille 5 du carter 2.

Cette portion 242 est emboutie en 343 pour maintien et positionnement des ressorts 50 selon une caractéristique de l'invention. Les ressorts 50 sont bloqués axialement dans un sens par la zone de raccordement de la portion de maintien 242 à la partie interne 241 de la rondelle de guidage 40, ici sa partie transversale 241, et dans l'autre sens par l'embouti 343 fractionné, en forme de bourrelet arrondi, décrit ci-après.

Ce bourrelet 343 est pratiqué au niveau du raccordement de la portion annulaire de maintien 242 avec un rebord périphérique annulaire d'orientation axiale 348 de rigification prolongeant ladite portion.

Ici le voile 60 est fixé par soudage en 563 directement à la roue de turbine 10. Les portions 565 d'appui des ressorts 50 ayant une forme sinueuse analogue à celle de la figure 1, ces portions 565 se raccordent par un arrondi à la portion de fixation et de soutien 562 du voile 60 à la roue de turbine.

La portion 562 épouse la forme de la roue de turbine 10.

A la figure 32, le voile 60 est fixé également directement par soudage en 663 à la roue de turbine 10. Ce soudage est effectué au niveau de l'arrondi de raccordement, que présente la partie de maintien 661.

Comme dans les figures 22 à 38, la rondelle de guidage 40 présente des pattes de clipsage 243 pour leur retenue par rapport au voile 60 et plus particulièrement pour coopération du rebord transversal 244 des pattes 243 avec la tranche de la périphérie externe du voile 60.

Ce voile 60 comporte à sa périphérie interne et externe une portion d'orientation axiale. Ces portions axiales sont raccordées l'une à l'autre successivement par une première zone arrondie de support, une portion transversale et une deuxième portion arrondie 662. C'est cette portion de révolution 662 qui va faciliter le montage par encliquetage de la rondelle de guidage 40 préalablement équipée des ressorts 50 sur le voile.

La portion 662 permet donc un soulèvement des pattes 243 et se raccorde donc à un rebord périphérique annulaire d'orientation axiale du voile 60.

Dans cette figure c'est le voile 60 qui porte la rondelle de guidage contrairement aux modes de réalisation des figures 22 à 30.

Les crevés d'appui sinueux 665 s'étendent entre les deuxdites portions axiales.

Ici la partie transversale 341 de la rondelle de guidage 40 est prolongée à sa périphérie interne par un rebord d'orientation axiale 342 troué en 380 pour formation de mortaises et montage d'un disque 62 portant à solidarisation sur chacune de ses faces des garnitures de friction 24 propres à être serrées entre la coquille 5 et le piston 321 pour formation d'un embrayage. La rondelle 40 est donc reliée de manière débrayable, via le piston 321, à la coquille 5. Ainsi la partie d'entrée de l'amortisseur contient un élément de soutien (la rondelle de guidage) et un disque avec une liaison du type tenons-mortaises entre ceux-ci.

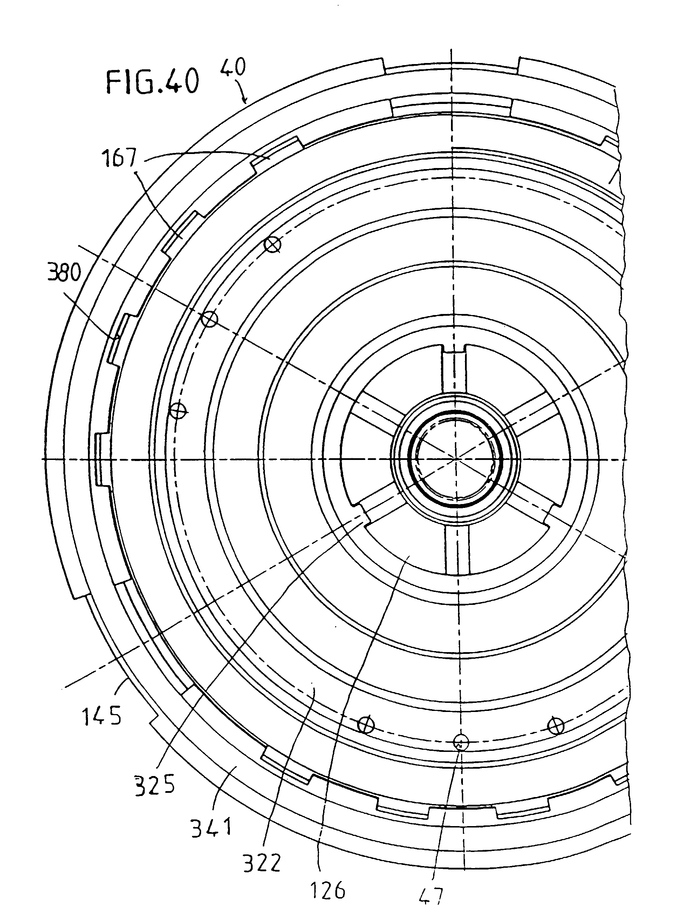

Ici la rondelle de guidage 40 est donc reliée à la partie d'entrée d'un embrayage proprement dit, ladite partie d'entrée consistant en un disque doté à sa périphérie externe de tenons 167 engrenant avec les ouvertures 380, ici fermées, (visibles à la figure 40 décrite ci-après).

Le piston 321 est calé en rotation sur la coquille 5 de manière décrite ci-après.

Ainsi l'amortisseur de torsion est monté en série avec l'embrayage proprement dit.

Il est donc créé un embrayage de verrrouillage biface permettant de transmettre un couple important et peu encombrant axialement du fait que le piston 321 s'étend dans la partie médiane de la roue de turbine 10, tandis que l'amortisseur de torsion est implanté à la périphérie externe de ladite roue de turbine 10.

Bien entendu (figure 34) on peut fixer la rondelle de guidage 40 directement sur la coquille 5 présentant à cet effet des rivets extrudés 70 traversant les ouvertures 47 de la rondelle de guidage 40.

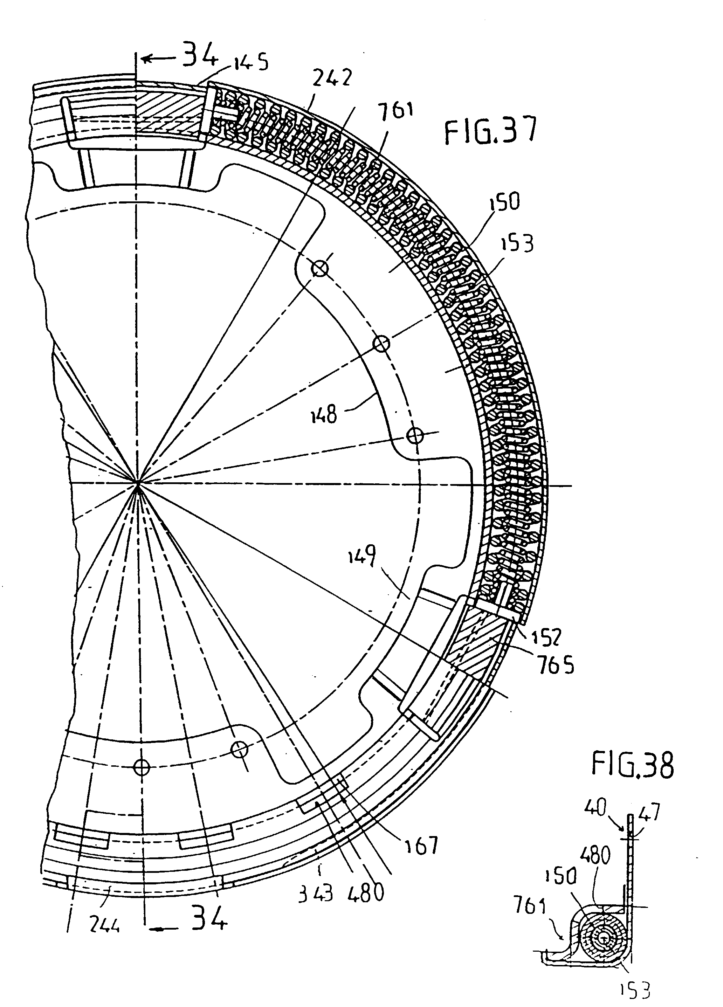

Dans ce cas le disque 62 (figure 37) engrène grâce à ces tenons 167 avec des fentes arrondies 480 prévues dans la portion de maintien 761. Ces fentes 480, en forme de mortaises, sont plus nombreuses que les fentes 764 associées aux portions d'appui 765, de forme sinueuse selon l'invention.

Comme à la figure 32, les pattes 243 coopèrent avec la tranche du bord périphérique externe 368 du voile 60 pour retenir celui-ci et former un sous-ensemble comportant l'amortisseur de torsion 20 et la coquille 5. Dans ce cas, le rebord périphérique 368 n'est pas entaillé contrairement au mode de réalisation de la figure 2 car il existe axialement suffisamment de place.

A la figure 34, c'est la rondelle de guidage 40 qui retient le voile et porte celui-ci, tandis qu'à la figure 32 c'est l'inverse.

On notera que la rondelle de guidage comporte des languettes 148 pour sa fixation à la coquille 5 et des languettes 149 dans laquelle sont formées les pattes 46 et 145.

Un bourrelet 343, ici fractionné, est prévu également dans la rondelle de guidage 40, comme dans les figures 31 et 32, pour maintenir et positionner les ressorts 50.

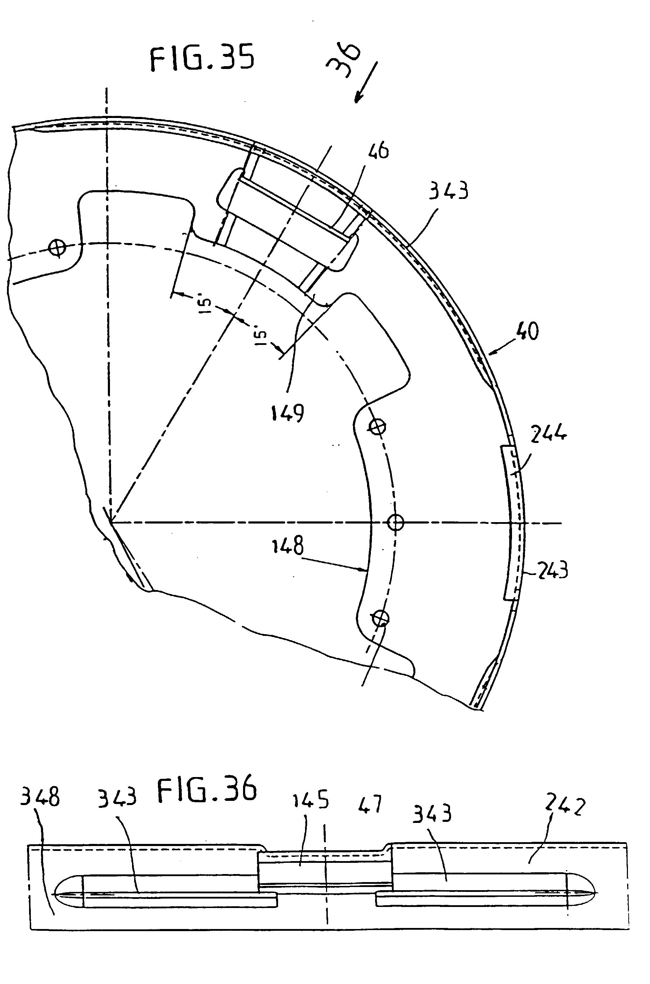

Comme mieux visible à la figure 36, les bourrelets 343 s'étendent en majeure partie circonférentiellement de part et d'autre des pattes 145 et ont une longueur circonférentielle telle qu'elle tient compte du débattement angulaire relatif entre le voile 60 et la rondelle 40.

Dans tous les cas, la longueur des bourrelets est telle que l'extrémité circonférentielle concernée du ressort 150 reste toujours en contact avec ce bourrelet 343.

Bien entendu la position de ce bourrelet 343 tient compte de la dimension des ressorts 150.

Ici les bourrelets 343 n'affectent pas les parties d'appui et centrales des pattes 145.

Ici les organes élastiques 50 consistent uniquement en des ressorts à boudin 150,153 montés de manière concentrique et s'étendant entre deux crevés d'appui 765 consécutifs. Ces ressorts s'appuient sur les coupelles 152.

Comme à la figure 25, ces ressorts 150,153 sont soutenus par les portions de maintien 242 de la rondelle de guidage 40 et 761 du voile 60.

On notera que le disque 62 avec ses garnitures 24 est destiné à être serré entre le piston et un contre-piston 31 comme dans les figures 11 à 15.

Il est ainsi créé un embrayage de verrouillage biface comme à la figure 32, le voile 60 étant calé en rotation sur le moyeu 18 de manière débrayable grâce au contre-piston 31 solidaire du moyeu 18 et de la roue de turbine 10.

Bien entendu diverses combinaisons sont possibles.

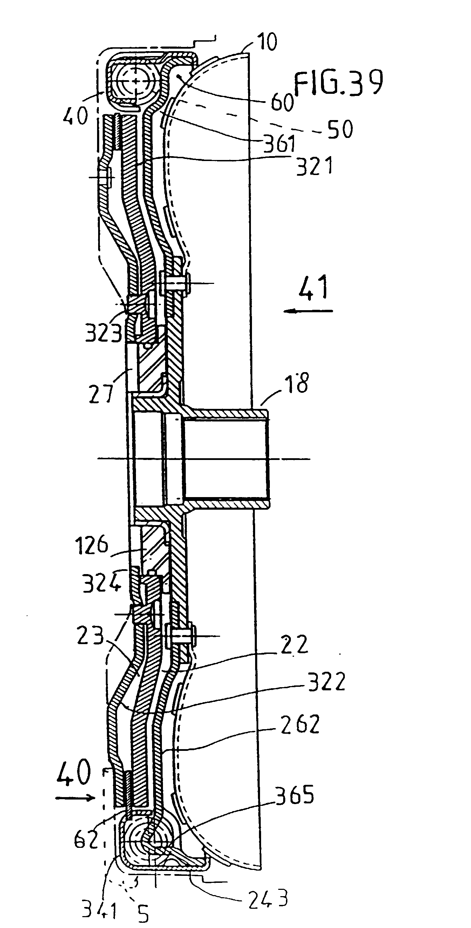

Ainsi à la figure 39 le voile 60 a une configuration analogue à celui de la figure 2, tandis que la rondelle de guidage 40 a une configuration analogue à celle de la figure 22 et les organes élastiques une configuration de celle de la figure 37.

Bien entendu un seul ressort 150 peut être prévu entre deux crevés consécutifs 365.

Un flasque 262 s'étend parallèlement au piston 321 et prolonge vers l'intérieur la portion de maintien 361 dans laquelle sont pratiqués les crevés 365. Le flasque 262 est directement fixé par rivetage sur le moyeu 18 de la roue de turbine 10.

Le disque 62 présente donc des tenons 167 qui engrènent avec les ouvertures 380 affectant la périphérie interne de la portion transversale 341 ainsi que le rebord d'orientation axiale référencé en 342 à la figure 12.

Les garnitures de friction 24 du disque 62 sont propres à être serrées entre le piston 321 et une pièce 322 de réaction propre à être fixée par rivetage à la coquille 5. Toutes ces pièces appartiennent à l'embrayage de verrouillage.

Bien entendu on peut inverser les structures, c'est-à-dire que les garnitures 24 peuvent être solidaires du piston 321 et de la pièce 322, le disque 62 étant dépourvu de garnitures. Il en est de même dans toutes les variantes où deux garnitures 24 sont disposées de part et d'autre du disque 62. Ces garnitures pouvant être solidaires des pièces entre lesquelles est serré l'ensemble disque 62 et garnitures 24.

La pièce 322 évite d'usiner de manière précise la coquille 5.

Ainsi cette pièce 322 présente des ouvertures 47, pour passage de rivets issus de la coquille 5. Cette pièce 322 présente à sa périphérie interne des pattes 324 qui engrènent avec des encoches 325 (figure 40) ménagées à la faveur de rainures 27, que présente une bague de poussée bi-matière 126 montée sur le moyeu 17. Cette bague est ainsi reliée en rotation au carter 2 et à la coquille 5 via la pièce 322.

Ainsi qu'on le sait les rainures 27 sont destinées à préssuriser et à dépressuriser la chambre 23 délimitée par le piston 321 et la pièce 322. Une autre chambre 23 étant délimitée par le voile 60 et le piston 321.

Ainsi par variation des pressions dans les chambres 22 et 23, on déplace le piston 321 dans un sens ou dans l'autre pour serrer ou desserrer les garnitures 24.

Axialement la bague 126 est interposée entre le flasque que présente d'un seul tenant le moyeu de turbine 18 et la coquille 5.

Le piston 321 coulisse le long de cette bague 126 et est lié en rotation à la pièce 322 à la faveur de tétons 323 qu'il présente à sa périphérie interne, lesdits tétons 323 pénétrant dans des ouvertures complémentaires ménagées dans la pièce 322 offrant une face de friction à sa périphérie externe pour les garnitures de friction du disque 62, plus précisément pour serrage des garnitures 22 solidaires du disque 62 entre le piston 321 et la pièce 322.

Le piston 321 est donc calé en rotation sur la coquille 5 et coulisse axialement le long de la bague 126.

La rondelle de guidage 40 présente des pattes d'encliquetage 243 comme mentionnées précédemment.

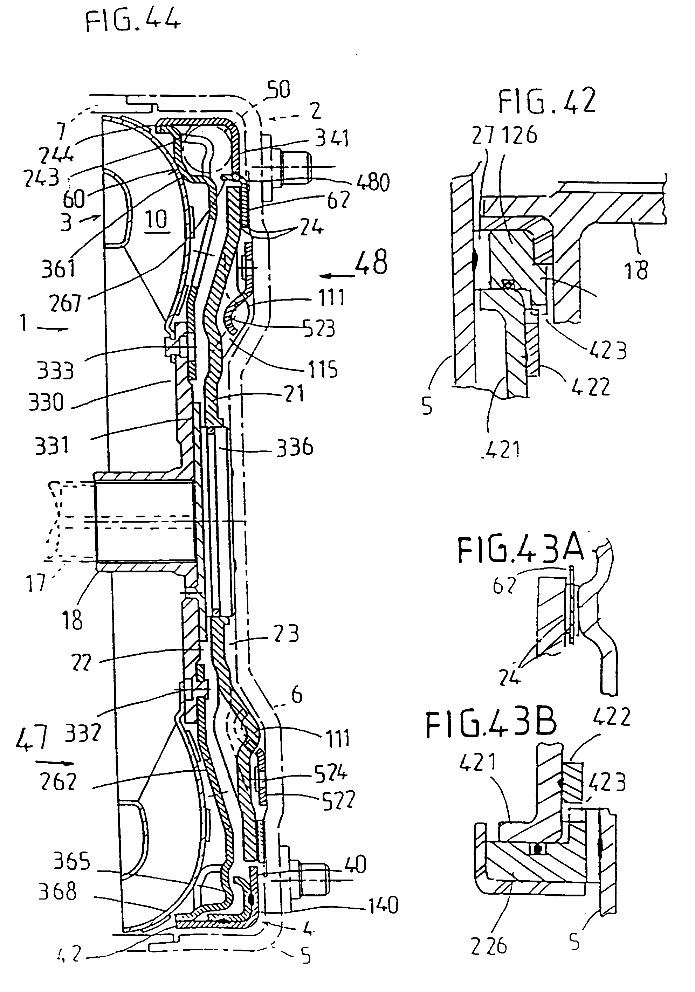

Bien entendu il est possible de supprimer la pièce 322 et dans ce cas les garnitures de friction du disque 62 sont propres à être serrées entre le piston 421, calé en rotation sur la coquille 5 via la bague soudée 126, et la coquille 5 de l'embrayage proprement dit (figure 42).

Pour ce faire, le piston 421 est monté mobile axialement sur la bague 126 en étant lié à celle-ci par des moyens d'engrènement à jeu 423.

Ces moyens d'engrènement sont formés à la faveur d'une pièce 422 fixée par soudage sur le piston 421.

Dans ce cas, la bague 126 est fixée par soudage à la coquille 5.

Plus précisément la pièce 422 est dotée à sa périphérie interne de cannelures propres à venir en prise avec des cannelures ménagées à la périphérie externe d'un rebord radial 424, que présente à cet effet la bague 126.

Il y a ainsi engrènement de la pièce 422 avec le rebord 424. La pièce 422 est fixée par soudage sur la face du piston 421, tournée à l'opposé de la coquille 5.

Bien entendu la pièce 422 peut être fixée par rivetage sur le piston 421.

Bien entendu (figure 43) on peut inverser les structures, la pièce 422 étant alors disposée sur la face du piston 421 tournée vers la coquille 5.

On appréciera que les modes de réalisation des figures 42,43 et 44 conviennent pour lier le piston 321 de la figure 22 en rotation avec la coquille 5 et c'est pour cette raison que dans la figure 43, on a représenté de manière schématique, le disque 62 propre à engrener avec les ouvertures fermées, en forme de mortaises 380, de la figure 12.

Le piston 421 est donc dans les figures 42 et 43 propre à serrer les garnitures de friction 24 du disque 62 entre celui-ci et la coquille 5, appartenant à l'embrayage de verrouillage.

En variante la liaison peut être réalisée par des languettes tangentielles ou par coopération de formes.

Dans toutes ces figures 22 à 43 l'amortisseur de torsion ne comporte que deux pièces métalliques, réalisables aisément à la presse, pour le maintien des organes élastiques, les portions de maintien desdites pièces étant en face l'une de l'autre avec un axe de symétrie incliné par rapport à l'axe radial de symétrie des organes élastiques 50 ou ressorts 50.

Dans les figures 44 à 51 est illustré un appareil d'accouplement hydocinétique 1 pour véhicule automobile, du genre comportant un carter 2 doté d'une paroi transversale 6, propre à être liée en rotation à un arbre menant, une roue de turbine 10 solidaire d'un moyeu 18, propre à être lié en rotation à un arbre mené 17, une bague centrale de poussée 336 solidaire en rotation de la paroi transversale 6 du carter 2 et interposée axialement entre ladite paroi transversale 6 et le moyeu 2, et un embrayage de verrouillage 4 intervenant entre ladite roue de turbine 10 et ladite paroi transversale 6 du carter 2 de manière semblable aux modes de réalisation des figures 32,39,43.

L'embrayage 4 comporte un voile 60 solidaire de la roue de turbine 10, une rondelle de guidage 40 attelée au voile 60, des organes élastiques 50 intervenant circonférentiellement entre la rondelle de guidage 40 et le voile 60, un disque 62 lié en rotation à la rondelle de guidage 40, avec une mobilité axiale, par l'intermédiaire d'une liaison à coopération de formes 480, 267 du type tenon-mortaise, des garnitures de frottement 24 disposées de part et d'autre du disque 62, un piston 21 monté mobile axialement le long de la bague de poussée 336 et propre à venir serrer les garnitures de frottement 24 et le disque 62 entre lui-même et la paroi transversale 6 du carter 2, et des moyens de liaison en rotation 523, 111 intervenant entre le piston 21 et la paroi transversale 6 du carter 2. Lesdits moyens de liaison comportent une pièce de liaison 522 interposée axialement entre le piston 21 et la paroi transversale 6 du carter 2, ladite pièce de liaison 522 étant solidaire de la paroi transversale 6 du carter 2.

Suivant une caractéristique un appareil d'accouplement hydrocinétique du type sus-indiqué est caractérisé en ce que le piston 21 présente des emboutis 111 dirigés vers la paroi transversale 6 du carter 2 et présentant des bords latéraux 115, tandis que la pièce de liaison 522 comporte à sa périphérie interne des pattes 523 propres à venir en prise chacune avec l'un au moins des bords latéraux 115 des emboutis 111.

L'embrayage de verrouillage 4 intervient entre la roue de turbine 10 et la paroi transversale 6. Il coulisse par son piston 21, conformé en moyeu à sa périphérie interne à cet effet, sur la bague de poussée 336 solidaire de la paroi 6, ici par soudage. Cette disposition permet de simplifier la pièce de liaison 522 qui n'a donc pas de fonction supplémentaire à réaliser. L'arbre mené 17 est centralement creux, tandis que la bague de poussée présente à son extrémité adjacente à la paroi 6 des rainures, visibles notamment à la figure 20.

Le piston délimite une chambre 23 fermée par la paroi 6 et une chambre 22 délimitée par la roue de turbine 10.

Bien entendu un joint d'étanchéité est monté sur la bague 336 et la bague de poussée 336 qui présente des rainures pour circulation de l'huile passant par l'alésage central de l'arbre 17 et accédant à la chambre 23 par l'intermédiaire desdites rainures.

A la figure 44, le moyeu 18 présente, à l'une de ses extrémités axiales (la plus proche de la paroi 6), un voile de moyeu transversal 330 sur lequel est fixée la roue de turbine 10 et le voile 60. Les pièces 10 et 60 sont disposées de part et d'autre du voile de moyeu 330.

Plus précisément, selon une caractéristique de l'invention, ces fixations sont réalisées par rivetage. Le voile 330, ici métallique, présente, d'un seul tenant une première série de rivets 333 tournés axialement vers la roue 10 et une seconde série de rivets 332 tournés axialement vers le piston 21 et la paroi 6. Ces rivets sont réalisés par extrusion à partir du voile 330.

Ainsi, on économise la présence de rivets et les fixations de la roue de turbine 10 et du voile 60, de part et d'autre du voile 330, sont robustes puisqu'une seule pièce (le voile 60 ou la roue 10), est fixée au voile 330, par respectivement les rivets 332, 333.

Cette disposition permet d'éviter le stockage de rivets.

Bien entendu les rivets 332 alternent circonférentiellement avec les rivets 333. Pour ce faire le voile 60 est prolongé radialement en direction de l'axe de l'ensemble par un flasque 262 fixé à sa périphérie interne par les rivets 332 au voile 330.

Ce flasque 262 est doté d'une pluralité d'ouvertures, dont une est visible dans la partie haute de la figure 1, permettant d'alléger le voile et de faciliter la circulation de l'huile.

Ce voile 60 comporte une portion de maintien 361 annulaire pour retenir intérieurement les organes élastiques 50, ici des ressorts à boudins représentés en pointillés à la partie haute de la figure 1 pour une meilleure clarté. Ce voile 60 présente également des portions d'appui 365 pour les extrémité circonférentielles des ressorts 50.

Plus précisément, comme dans les figures 22 à 43, ces portions d'appui sont formées à la faveur de crevés d'appui, de forme sinueuse, s'étendant de la périphérie interne à la périphérie externe de la portion de maintien 361 du voile 60.

Ces crevés ont globalement une forme en V et comportent une portion d'orientation axiale se raccordant par une zone arrondie à un rebord annulaire périphérique externe 368 d'orientation axiale, que présente ladite portion de maintien.

La portion d'orientation axiale du crevé se raccorde par un arrondi à une portion inclinée elle-même se raccordant à la périphérie interne de la portion de maintien 361.

La rondelle de guidage 40 est conformée pour retenir extérieurement les ressorts 50. Elle a une forme annulaire, tout comme le voile 60, en étant métallique comme le voile 60. Ici, la rondelle de guidage a en section une forme d'équerre avec une portion d'orientation axiale dirigée vers la roue de turbine 10 et une portion d'orientation transversale 341 dirigée vers l'axe de l'ensemble.

Cette rondelle de guidage 40, ainsi que la portion de maintien 361 du voile 60, est implantée à la périphérie externe de la roue de turbine 10 et de la coquille 5.

Comme dans les figures 22 à 43, la rondelle de guidage présente des pattes d'encliquetage 243 formées à la faveur d'une interruption dudit rebord 42, lesdites pattes 243 étant dotées à leur extrémité libre d'une rebord transversal 244 dirigé vers l'axe de l'ensemble. Ce rebord 244 est propre à coopérer avec la tranche du rebord périphérique 368 du voile 60 entaillé pour venir en prise avec les rebords 244 des pattes 243 et bloquer ainsi en rotation les pattes.

Ainsi la rondelle de guidage 40 est attelée au voile 60 et il est formé un ensemble unitaire manipulable et transportable, comprenant le voile 60 - la rondelle de guidage 40 et les ressorts 50, que l'on vient fixer sur le voile de moyeu 330.

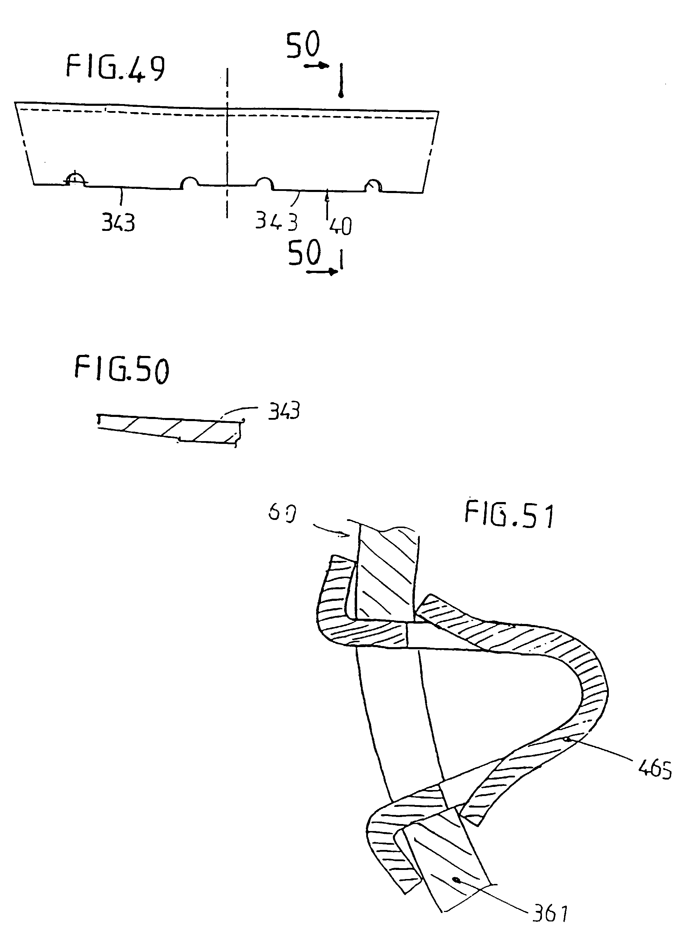

En variante (figures 49 et 50), les pattes 343 peuvent être rigides et le rebord 244 peut être réalisé en finale en étant rabattu en direction de l'axe de l'ensemble, au contact de la tranche du rebord périphérique 368, par pliage, à l'aide d'un outil, à chaud avec par exemple chauffage à haute fréquence.

Comme visible sur ces figures les pattes 243 sont courtes et sont d'épaisseur réduite, ici de manière progressive, pour faciliter leur pliage.

Grâce à cette disposition les pattes 343 demeurent constamment en prise avec le rebord 368 entaillé pour notamment éviter toute interférence avec la roue de turbine.

On notera qu'à la figure 49 les pattes 343 sont groupées par paires réparties à 120° les unes par rapport aux autres. Bien entendu cela dépend des applications.

En variante, le rebord 244 peut être formé par avance et on procède alors à un montage du type baïonnette. Pour cela le rebord 368 est localement embouti pour passage du rebord 244. Ici l'emboutissage conduit à la formation d'une gouttière. Ce rebord 368 est entaillé sur une grande étendue circonférentielle, supérieure à celle correspondant au débattement angulaire entre le voile 60 et la rondelle 40, et, après engagement axial du rebord 244 à travers l'emboutissage du rebord 368, on effectue un mouvement de rotation du rebord 244, puis on monte une pièce d'appui 465 pour les ressorts 50.

Ici ce montage est effectué par encliquetage et, comme visible à la figure 51, le voile 60 présente des ouvertures. Ensuite les pattes ne peuvent plus s'échapper.

En variante on peut monter la pièce d'appui puis procéder à une fixation par soudage ou rivetage au lieu de l'encliquetage.

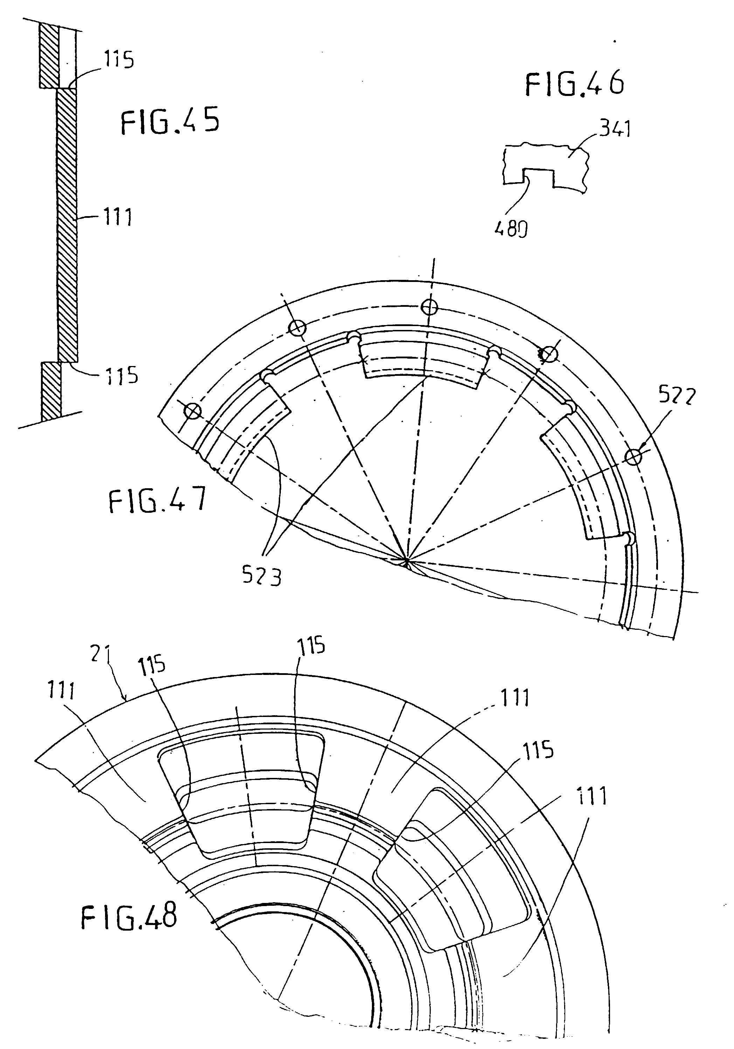

Le disque 62 présente à sa périphérie externe des pattes 267 d'orientation axiale pénétrant dans des encoches 480 (figure 46) formées à la périphérie interne de la portion transversale 341 de la rondelle de guidage 40.

Ainsi il est créé une liaison du type tenon-mortaise et le disque 62 est lié en rotation à la rondelle de guidage 40 tout en étant mobile axialement par rapport à celle-ci.

Ceci est rendu possible grâce au fait que les appuis pour les extrémités circonférentielles des ressorts 50 sont formés à la faveur de pièces 140 rapportées localement par soudage sur la rondelle de guidage 40, à l'intérieur de celle-ci.

La pièce d'appui 140 épouse la forme de la rondelle de guidage et a donc en section une forme d'équerre dont l'un des bords est prolongé par un arrondi.

La pièce 140 est très robuste et est située en vis-à-vis de la portion d'appui 365 du voile (partie basse de la figure 44).

Ainsi, la fabrication de la rondelle de guidage 40 est simplifiée.

Les garnitures de frottement 24 sont ici collées sur le disque 62 et s'étendent de part et d'autre de celui-ci.

La face de la portion transversale 6 en vis-à-vis de la rondelle 24 est usinée pour former une portée de frottement pour la rondelle 24 concernée.

Bien entendu, en variante, les rondelles 24 peuvent être fixées respectivement sur le piston 21 et sur la paroi 6. Le piston 21 s'étend radialement en dessous des pattes 267 et présente dans sa partie médiane des emboutis 111, qui rigidifient le piston 21.

Ces emboutis 111, comme visible à la figure 2, sont formés par découpage non traversant à l'aide d'un outil, conduisant à un repoussement de matière.

Les bords latéraux 115 des emboutis 111 sont donc d'une bonne précision et une légère bande de matière existe entre l'embouti 111 et la partie principale du piston 21 en sorte que celui-ci est étanche (figure 45).

La pièce de liaison 522 est fixée par rivetage à la paroi 6. Les rivets 524 sont formés par extrusion de la paroi 6 qui est métallique tout comme la pièce 522 et le piston 521.

La pièce de liaison 522 est de forme annulaire et comporte une partie périphérique de forme annulaire traversée, à la faveur d'ouvertures (figure 47), par les rivets de fixation 524. Cette partie annulaire comporte à sa périphérie interne, des pattes 523 de forme courbe. Ces pattes 523 sont tournées vers la roue de turbine 10 et ont globalement en section la forme d'un C.

On appréciera que cette forme se marie bien avec celle des emboutis 111 qui, en section, ont une forme pointue à sommet arrondi tourné vers la paroi 6.

Ces pattes 523 sont peu agressives et sont propres à coopérer par leur tranche avec l'un au moins des bords latéraux 115 des emboutis 111. Dans une première réalisation chaque patte 523 coopère avec l'un des bords latéraux 115 d'un embouti 111, en sorte que deux pattes 523 sont associées à chaque embouti 111.

La longeur circonférentielle des pattes 523 est inférieure à celle séparant deux emboutis 111 successifs.

Ici (figures 46 et 47) on augmente la largeur circonférentielle des pattes 523 afin que celle-ci corresponde à la distance circonférentielle entre deux emboutis 111 successifs. Dans ce cas, la patte 523 coopère avec deux bords latéraux 115 de deux emboutis 111 successifs.

Bien entendu un léger jeu de montage existe alors entre les extrémités circonférentielles des pattes 523 et les bords latéraux 115 des emboutis 111 successifs.

Ce mode de réalisation est avantageux. En effet, ici six emboutis 111 sont répartis régulièrement circonférentiellement et la pièce de liaison 522 présente six pattes complémentaires. Le nombre de pattes 523 est donc deux fois plus petit que celui de la première réalisation.

En outre, ces pattes 523 sont plus robustes que celles de la première réalisation car elles sont plus larges.

En variante, on peut associer une seule patte 523 à un embouti 111. Ces pattes peuvent être montées alors de manière alternée, l'une des pattes 523 coopérant avec l'un des bords 115 de l'embouti 111, tandis que l'autre patte coopère avec l'autre bord 115 d'un autre embouti 111.

Dans tous les cas, un bon contact entre la tranches des pattes 523 et les bords 115 peut être ainsi obtenu. On appréciera qu'un bon coulissement du piston 121 peut avoir lieu du fait de la configuration des moyens de liaison en rotation 111, 523 selon l'invention.

En outre, ces moyens de liaison 523, 111 sont implantés sur une circonférence de diamètre supérieur à celui de la bague de poussée 336.

Cette bague 336 porte à son extrémité libre une rondelle 331 de frottement. Cette bague 336 est centralement creuse et présente par exemple un changement de diamètre non visible pour centrage de la rondelle 331.

Cette rondelle d'interposition, comme montrée à la figure 1, peut être solidarisée au moyeu 18 à l'aide de pions pénétrant dans des ouvertures pratiquées dans le voile de moyeu 330.

Les extrémités des pions sont écrasées en sorte que la rondelle 331, ici en matière plastique, est liée, par exemple par soudage à ultrasons, au voile de moyeu 330.

Ainsi, en fonctionnement, l'huile peut accéder à la chambre 23 pour pressuriser ou dépressuriser celle-ci et la rondelle 331 limite le déplacement du piston 21.

Lorsque l'embrayage de verrouillage est engagé, le piston 21 serre les garnitures 24 entre lui-même et la paroi 6 en sorte que le mouvement est transmis directement de la coquille 5 au moyeu 18 à travers l'embrayage 4 et notamment la rondelle de guidage 40, les ressorts 50 et le voile 60 de celui-ci. Il y a donc filtration des vibrations et formation d'un embrayage biface permettant de transmettre un couple important.

Lors du désengagement de l'embrayage de verrouillage 4 on pressurise la chambre 23 et le piston 21 se déplace en direction de la rondelle 331 pour libérer les garnitures 24.

Le disque 62 peut alors coulisser axialement grâce à ses pattes 267 d'orientation axiale en prise avec les encoches 480.

Le disque 62 reste donc en permanence en prise avec la rondelle de guidage 40 et ne risque pas de s'échapper de celle-ci.

On appréciera que l'embrayage de verrouillage 4 est très fiable et fonctionne dans de bonnes conditions, ses pattes 523 étant implantées, ainsi que les emboutis 111, globalement radialement au niveau de la périphérie interne de la roue de turbine 10 et radialement au-dessus des rivets 333, 332 et de la bague 336.

Bien entendu la rondelle de guidage peut avoir la forme de celle décrite à la figure 19, les appuis des ressorts étant d'un seul tenant avec la rondelle de guidage 40.

Bien entendu les organes élastiques 50 peuvent être montés par paire et la bague de poussée 336 peut être solidarisée par rivetage à la partie centrale de la paroi 6.

La configuration de la figure 19 est envisageable mais cela revient à compliquer la pièce de liaison.

Bien entendu dans les liaisons du type tenons-mortaises intervenant entre l'un des éléments rondelles de guidage 40 - voile 60 et le disque 62, on peut inverser les structures, ledit élément 40-60 présentant des tenons et le disque des mortaises.

Par exemple à la figure 44 la partie transversale 341 de la rondelle 40 peut présenter des tenons engrenant avec des mortaises pratiquées alors dans le disque 62 qui présente alors à sa périphérie externe un rebord annulaire, d'orientation axiale, dans lequel sont formées les mortaises.

A la figure 32 le rebord 342 peut être fractionné en pattes (à la manière d'un peigne) pénétrant dans des encoches complémentaires formées à la périphérie externe du disque 62.

A la figure 45 les emboutis 111 peuvent se raccorder par des zones arrondies à la partie principale du piston 21.

Enfin on peut inverser les positions du voile 60 et de la rondelle de guidage 40, le voile 60 entourant alors la rondelle 40. Par exemple à la figure 31, on retourne alors le voile 60 et la rondelle 40.

## Revendications

1. Amortisseur de torsion pour embrayage de verrouillage (4) propre à intervenir entre l'élément menant (2) et l'élément mené (10) d'un appareil d'accouplement hydrocinétique (1), comportant deux parties coaxiales (40,60) mobiles l'une par rapport à l'autre à l'encontre de ressorts (50) à action circonférentielle, à savoir une partie d'entrée dotée d'une rondelle de guidage (40) et une partie de sortie (60) dotée d'un voile, dans lequel la rondelle de guidage (40) comporte une portion de maintien (42,142,...) en forme de demi-coquille et des portions d'appui (45,145,...) pour respectivement maintenir les ressorts (50) et permettre leur appui, tandis que le voile (60) comporte également des portions d'appui (65,165,...) pour permettre un appui aux ressorts (50), caractérisé en ce que le voile (60) comporte une portion de maintien (61,161,...) , pour maintenir radialement les ressorts (50), en forme de demi-coquille, en ce que lesdites portions d'appui du voile sont portées par ladite portion de maintien du voile, et en ce que lesdites portions de maintien de la rondelle de guidage (40) et du voile (60) sont décalées axialement l'une par rapport à l'autre.

2. Amortisseur selon la revendication 1, caractérisé en ce que les portions d'appui (365,565,665,765) du voile (60) sont formées à la faveur de crevés d'appui, de forme sinueuse, s'étendant de la périphérie interne à la périphérie externe de la portion de maintien (361,461,561,661,761) du voile (60).

3. Amortisseur selon la revendication 2, caractérisé en ce que lesdits crevés ont globalement une forme en V.

4. Amortisseur selon la revendication 3, caractérisé en ce que lesdits crevés d'appui comportent une portion d'orientation axiale se raccordant par une zone arrondie (369,662) à un rebord annulaire périphérique (144,368) d'orientation axiale, que présente ladite portion de maintien, et en ce que ladite portion d'orientation axiale du crevé d'appui (365,565,665,765) se raccorde par un arrondi à une portion inclinée, elle-même se raccordant à un arrondi à la périphérie interne de ladite portion de maintien.

5. Amortisseur selon la revendication 4, dans lequel la rondelle de guidage (40) est interrompue localement par deux séries de pattes (46,145) formant des appuis pour lesdits organes élastiques, les pattes (46) de la seconde série s'étendant axialement en-dessous des pattes (145) de la première série issues de la portion de maintien (42,242) de la rondelle de guidage (40) , caractérisé en ce que les pattes (145) de la première série sont formées par déformation de matière vers l'intérieur, et en ce que lesdites pattes (145) s'étendent axialement au-dessus des portions d'orientation axiale des crevés d'appui (365,565,665,765) du voile (60).

6. Amortisseur selon l'une quelconque des revendications 2 à 5, dans lequel les organes élastiques (50) consistent en des ressorts à boudin, caractérisé en ce que certains au moins desdits ressorts à boudin (150,153) s'appuient à leurs extrémités circonférentielles sur les crevés d'appui (365,565,665,763) par l'intermédiaire de coupelles d'appui (152).

7. Amortisseur selon la revendication 6, caractérisé en ce que certains des ressorts à boudin (151) sont montés flottant entre deux séries de crevés d'appui (365,565,665,765) en étant retenus par les portions de maintien (42,242;361) de la rondelle de guidage (40) et du voile (60).

8. Amortisseur selon l'une quelconque des revendications 1 à 7, caractérisé en ce que la portion de maintien (242) de la rondelle de guidage (40) est emboutie pour maintien et positionnement des organes élastiques (150,153).

9. Amortisseur selon la revendication 8, dans lequel la portion de maintien (242) se prolonge par un rebord périphérique annulaire d'orientation axiale (348), caractérisé en ce que l'embouti (343) est pratiqué au niveau du raccordement de la portion de maintien (342) avec ledit rebord (348).

10. Amortisseur selon l'une quelconque des revendications 1 à 9, dans lequel la rondelle de guidage comporte à sa périphérie externe un rebord annulaire (143,348) d'orientation axiale, caractérisé en ce que ledit rebord (143,348) est interrompu localement pour formation de pattes d'encliquetage (243) ayant un rebord transversal (244) dirigé vers l'axe de l'ensemble, et en ce que ledit rebord (244) est propre à coopérer avec la tranche d'un rebord périphérique (143,348) du voile (60) pour formation d'un ensemble unitaire manipulable et transportable.

11. Amortisseur selon la revendication 10, caractérisé en ce que ledit rebord périphérique (348) du voile (60) est entaillé au niveau des pattes d'encliquetage (243), en sorte qu'il est formé un rebord périphérique d'orientation axiale (144) plus court que ledit rebord (348).

12. Amortisseur selon la revendication 10, caractérisé en ce qu'une rondelle (95), associée à au moins une garniture de friction (195) est interposée entre le rebord (244) des pattes d'encliquetage et la périphérie externe de la portion de maintien (361) du voile (60).

13. Amortisseur selon la revendication 12, caractérisé en ce que la périphérie externe (461) de ladite portion de maintien (361) est en majeure partie d'orientation transversale pour coopération avec la ou lesdites garnitures de friction (195).

14. Amortisseur selon l'une quelconque des revendications 1 à 13, caractérisé en ce que l'un des éléments rondelle de guidage (40) - voile (60) est lié en rotation à un disque (62) par une liaison du type tenon-mortaise, ledit disque (62) étant adapté à être serré entre un piston (21,121,231,321,421) et un contre-piston (5,31).

15. Amortisseur selon la revendication 14, dans lequel la rondelle de guidage (40) présente une partie transversale (341), caractérisé en ce que ladite partie transversale (341) est prolongée à sa périphérie interne par un rebord d'orientation axiale (342) troué pour formation de mortaises (380) et montage d'un disque (62) doté à sa périphérie externe de tenons (167) engrenant avec lesdites ouvertures (380).

16. Amortisseur selon la revendication 14, dans lequel la rondelle de guidage présente une partie transversale (341), caractérisé en ce que ladite partie transversale (341) est dotée à sa périphérie interne d'encoches (480) dans lesquelles pénètrent des pattes d'orientation axiale (267), que présente ledit disque (62) à sa périphérie externe.

17. Amortisseur selon la revendication 14, caractérisé en ce que la portion de maintien (61,361) du voile (60) présente des mortaises (380) pour montage du disque (62) doté à sa périphérique externe de tenons (167) engrenant avec lesdites mortaises.

18. Amortisseur selon la revendication 17, caractérisé en ce que les mortaises (64,164) consistent des fentes fermées chacune par un épaulement (67) propre à limiter les déplacements du disque 62 par coopération avec le tenon (167) concerné de celui-ci.

19. Embrayage de verrouillage propre à intervenir entre le carter (2) et la roue de turbine (10) d'un appareil d'accouplement hydrocinétique, notamment pour véhicule automobile, du genre comportant un piston (21) globalement d'orientation transversale, caractérisé en ce qu'il comporte un amortisseur de torsion selon l'une quelconque des revendications 1 à 13, et en ce que la rondelle de guidage (40) est fixée audit piston (21) propre à serrer une garniture de frottement (24) entre celui-ci et une coquille (5) appartenant au carter (2) de l'appareil d'accouplement hydrocinétique.

20. Embrayage de verrouillage monté entre le carter (2) et la roue de turbine (10) d'un appareil d'accouplement hydrocinétique, notamment pour véhicule automobile, du genre comportant un piston (21) globalement d'orientation transversale, caractérisé en ce qu'il comporte un amortisseur de torsion selon la revendication 17, en ce que la rondelle de guidage (40) est fixée à une coquille (5) du carter (2) de l'appareil d'accouplement hydrocinétique, et en ce que le voile (60) est calé en rotation de manière débrayable sur un moyeu (18) solidaire de la roue de turbine (10) par l'intermédiaire d'un contre-piston (31) solidaire du moyeu (18) et serrage de garnitures de frottement, solidaires du disque (62), entre le piston (21) et le contre-piston (31).

21. Embrayage de verrouillage monté entre le carter (2) et la roue de turbine (10) d'un appareil d'accouplement hydrocinétique, notamment pour véhicule automobile, caractérisé en ce qu'il comporte un amortisseur de torsion selon la revendication 15 et en ce que le voile (60) est fixé par soudage (563,663) à la roue de turbine (10).

22. Embrayage de verrouillage monté entre le carter (2) et la roue de turbine (10) d'un appareil d'accouplement hydrocinétique, notamment pour véhicule automobile, caractérisé en ce qu'il comporte un amortisseur de torsion selon l'une quelconque des revendications 1 à 5, en ce que le voile (60) est fixé par soudage (563) à la roue de turbine (10), et en ce que la rondelle de guidage est fixée à un piston (221) propre à serrer une garniture de frottement (24) entre celui-ci et une coquille (5) du carter (2).

23. Embrayage de verrouillage, pour appareil d'accouplement hydrocinétique (1) entre un élément menant (2) et un élément mené (18), en particulier pour véhicule automobile, comprenant un amortisseur de torsion (20), selon la revendication 1, un piston (21,121) monté mobile axialement par rapport à l'élément mené (18), au moins une garniture de frottement (24) associée au piston et propre à être serrée entre ledit piston et un contre-piston (31,131), caractérisé en ce que la partie d'entrée (40) de l'amortisseur de torsion (20) est propre à être solidarisée à l'élément menant (2), en ce que la partie de sortie (60) comporte deux éléments, à savoir, un élément de soutien (61,161,261) des ressorts (50) et un disque (62) mobile axialement par rapport à l'élément de soutien (61,161,261) en étant lié en rotation à celui-ci, en ce que des garnitures de frottement (24) sont disposées de part et d'autre dudit disque (62), en ce que lesdites garnitures de frottement (24) sont propres à être serrées entre le piston (21) et le contre-piston (31) solidaire en rotation de l'élément mené (18), en ce que le piston (21) est monté mobile axialement par rapport au contre-piston (31,131) en étant lié en rotation avec celui-ci, en ce que ledit piston (21) est monté mobile sur un arbre de piston (25) solidaire du contre-piston (31) et en ce que l'élément de soutien (61) présente une butée (67), tournée vers le contre-piston (31,131), pour limiter le déplacement du disque (62).

24. Embrayage selon la revendication 23, caractérisé en ce que des moyens de liaison en rotation avec mobilité axiale (100,101.200) interviennent directement entre le piston (21,121) et le contre-piston (31,131).

25. Embrayage selon la revendication 24, caractérisé en ce que lesdits moyens de liaison en rotation consistent en des protubérances (101) du contre-piston (31), telles que des emboutis, venant s'engager dans des creux (100) du piston (21).

## Patentansprüche

1. Torsionsdämpfer für eine verriegelbare Kupplung (4), die zwischen dem treibenden Element (2) und dem getriebenen Element (10) eines hydrodynamischen Getriebes (1) zum Einsatz kommen kann, bestehend aus zwei koaxialen Teilen (40, 60), die entgegen am Kreisumfang wirksamen Federn (50) im Verhältnis zueinander beweglich sind, und zwar aus einem Eingangsteil mit einer Führungsscheibe (40) und einem Ausgangsteil (60) mit einem Zwischenstück, wobei die Führungsscheibe (40) einen halbschalenförmigen Halteabschnitt (42, 142, ...) und Auflageabschnitte (45, 145, ...) umfaßt, um die Federn (50) zu halten bzw. ihre Auflage zu ermöglichen, während das Zwischenstück (60) ebenfalls Auflageabschnitte (65, 165, ...) umfaßt, um eine Auflage für die Federn (50) zu ermöglichen, **dadurch gekennzeichnet,** daß das Zwischenstück (60) einen halbschalenförmigen Halteabschnitt (61, 161) umfaßt, um die Federn (50) zu halten, daß die besagten Auflageabschnitte des Zwischenstücks an dem besagten Halteabschnitt des Zwischenstücks angebracht sind und daß die besagten Halteabschnitte der Führungsscheibe (40) und des Zwischenstücks (60) im Verhältnis zueinander axial versetzt sind.

2. Torsionsdämpfer nach Anspruch 1 , **dadurch gekennzeichnet,** daß die Auflageabschnitte (365, 565, 665, 765) des Zwischenstücks (60) durch Auflageeinschnitte mit gewundener Form gebildet werden, die sich vom Innenumfang zum Außenumfang des Halteabschnitts (361, 461, 561, 661, 761) des Zwischenstücks (60) erstrecken.

3. Torsionsdämpfer nach Anspruch 2 , **dadurch gekennzeichnet**, daß die besagten Einschnitte insgesamt V-förmig ausgeführt sind.

4. Torsionsdämpfer nach Anspruch 3 , **dadurch gekennzeichnet,** daß die besagten Auflageeinschnitte einen axial ausgerichteten Abschnitt umfassen, der sich über einen abgerundeten Bereich (369, 662) an eine axial ausgerichtete ringförmige Umfangsrandleiste (144, 368) anschließt, die der besagte Halteabschnitt aufweist, und daß sich der besagte axial ausgerichtete Abschnitt des Auflageeinschnitts (365, 565, 665, 765) über eine Abrundung an einen abgeschrägten Abschnitt anschließt, der sich wiederum an einer Abrundung an den Innenumfang des besagten Halteabschnitts anschließt.

5. Torsionsdämpfer nach Anspruch 4, bei welchem die Führungsscheibe (40) örtlich durch zwei Reihen von Ansätzen (46, 145) unterbrochen wird, die Auflagen für die besagten elastischen Organe bilden, wobei sich die Ansätze (46) der zweiten Reihe axial unterhalb der Ansätze (145) der ersten Reihe erstrecken, die aus dem Halteabschnitt (42, 242) der Führungsscheibe (40) herausgearbeitet sind , **dadurch gekennzeichnet,** daß die Ansätze (145) der ersten Reihe durch Materialverformung nach innen gebildet werden und daß sich die besagten Ansätze (145) axial oberhalb der axial ausgerichteten Abschnitte der Auflageeinschnitte (365, 565, 665, 765) des Zwischenstücks (60) erstrecken.

6. Torsionsdämpfer nach einem der Ansprüche 2 bis 5, bei welchem die elastischen Organe (50) aus Schraubenfedern bestehen, **dadurch gekennzeichnet**, daß wenigstens einige der besagten Schraubenfedern (150, 153) mit ihren Umfangsenden an den Auflageeinschnitten (365, 565, 665, 765) zur Auflage kommen, was über Auflageteller (152) erfolgt.

7. Torsionsdämpfer nach Anspruch 6 , **dadurch gekennzeichnet,** daß einige der Schraubenfedern (151) schwebend zwischen zwei Reihen von Auflageeinschnitten (365, 565, 665, 765) gelagert sind, wobei sie durch die Halteabschnitte (42, 242; 361) der Führungsscheibe (40) und des Zwischenstücks (60) gehalten werden.

8. Torsionsdämpfer nach einem der Ansprüch 1 bis 7, **dadurch gekennzeichnet**, daß der Halteabschnitt (242) der Führungsscheibe (40) mit einer Vertiefung für die Halterung und Positionierung der elastischen Organe (150, 153) versehen ist.

9. Torsionsdämpfer nach Anspruch 8, bei welchem der Halteabschnitt (242) durch eine axial ausgerichtete ringförmige Randleiste (348) verlängert wird , **dadurch gekennzeichnet,** daß die Vertiefung (343) in Höhe des Anschlusses des Halteabschnitts (342) an die besagte Randleiste (348) vorgesehen ist.

10. Torsionsdämpfer nach einem der Ansprüche 1 bis 9, bei welchem die Führungsscheibe an ihrem Außenumfang eine axial ausgerichtete ringförmige Randleiste (143, 348) aufweist, **dadurch gekennzeichnet**, daß die besagte Randleiste (143, 348) örtlich zur Bildung von Rastansätzen (243) unterbrochen wird, die eine zur Achse der Einheit gerichtete Querrandleiste (244) aufweisen, und daß die besagte Randleiste (244) mit der Kante einer Umfangsrandleiste (143, 348) des Zwischenstücks (60) zusammenwirken kann, um eine handhabbare und transportierbare einheitliche Baugruppe zu bilden.

11. Torsionsdämpfer nach Anspruch 10 , **dadurch gekennzeichnet**, daß die besagte Umfangsrandleiste (348) des Zwischenstücks (60) in Höhe der Rastansätze (243) eingekerbt ist, so daß eine axial ausgerichtete Umfangsrandleiste (144) gebildet wird, die kürzer als die besagte Randleiste (348) ist.

12. Torsionsdämpfer nach Anspruch 10 , **dadurch gekennzeichnet,** daß eine mit wenigstens einem Reibbelag (195) verbundende Scheibe (95) zwischen der Randleiste (244) der Rastansätze und dem Außenumfang des Halteabschnitts (361) des Zwischenstücks (60) eingefügt ist.

13. Torsionsdämpfer nach Anspruch 12 , **dadurch gekennzeichnet**, daß der Außenumfang (461) des besagten Halteabschnitts (361) zum größten Teil quer ausgerichtet ist, um mit dem oder den besagten Reibbelägen (195) zusammenzuwirken.

14. Torsionsdämpfer nach einem der Ansprüche 1 bis 13, **dadurch gekennzeichnet,** daß eines der Elemente Führungsscheibe (40) und Zwischenstück (60) anhand einer Nut-Zapfen-Verbindung drehfest mit einer Kupplungsscheibe (62) verbunden ist, wobei die besagte Kupplungsscheibe (62) zwischen einem Kolben (21, 121, 231, 321, 421) und einem Gegenkolben (5, 31) eingespannt werden kann.

15. Torsionsdämpfer nach Anspruch 14, bei welchem die Führungsscheibe (40) einen Querteil (341) aufweist, **dadurch gekennzeichnet**, daß der besagte Querteil (341) an seinem Innenumfang durch eine axial ausgerichtete Randleiste (342) verlängert wird, die zur Bildung von Zapfenlöchern 380 und für den Einbau einer Kupplungsscheibe (62) gelocht ist, welche an ihrem Außenumfang Zapfen (167) aufweist, die mit den besagten Öffnungen (380) in Eingriff treten.

16. Torsionsdämpfer nach Anspruch 14, bei welchem die Führungsscheibe einen Querteil (341) aufweist, **dadurch gekennzeichnet**, daß der besagte Querteil (341) an seinem Innenumfang mit Ausklinkungen (480) versehen ist, in die axial ausgerichtete Ansätze (267) eingreifen, welche die besagte Kupplungsscheibe (62) an ihrem Außenumfang aufweist.

17. Torsionsdämpfer nach Anspruch 14 , **dadurch gekennzeichnet**, daß der Halteabschnitt (61, 361) des Zwischenstücks (60) Zapfenlöcher (380) für den Einbau der Kupplungsscheibe (62) aufweist, die an ihrem Außenumfang mit Zapfen (167) versehen ist, die mit den besagten Zapfenlöchern in Eingriff treten.

18. Torsionsdämpfer nach Anspruch 17 , **dadurch gekennzeichnet**, daß die Zapfenlöcher (64, 164) aus Schlitzen bestehen, die jeweils durch eine Schulter (67) verschlossen sind, welche die Verschiebungen der Kupplungsscheibe (62) durch Zusammenwirken mit deren jeweiligem Zapfen (167) begrenzen kann.

19. Verriegelbare Kupplung, die zwischen dem Gehäuse (2) und dem Turbinenrad (10) eines hydrodynamischen Getriebes, insbesondere für Kraftfahrzeuge, zum Einsatz kommen kann, in der Ausführung mit einem insgesamt quer ausgerichteten Kolben (21) , **dadurch gekennzeichnet**, daß sie einen Torsionsdämpfer nach einem der Ansprüche 1 bis 13 umfaßt und daß die Führungsscheibe (40) an dem besagten Kolben (21) befestigt ist, der einen Reibbelag (24) zwischen sich und einer Schale (5) einspannen kann, die zum Gehäuse (2) des hydrodynamischen Getriebes gehört.

20. Verriegelbare Kupplung, die zwischen dem Gehäuse (2) und dem Turbinenrad (10) eines hydrodynamischen Getriebes, insbesondere für Kraftfahrzeuge, eingebaut ist, in der Ausführung mit einem insgesamt quer ausgerichteten Kolben (21) , **dadurch gekennzeichnet**, daß sie einen Torsionsdämpfer nach Anspruch 17 umfaßt, daß die Führungsscheibe (40) an einer Schale (5) des Gehäuses (2) des hydrodynamischen Getriebes befestigt ist und daß das Zwischenstück (60) drehfest und ausrückbar mit einer Nabe (18) verbunden ist, die fest am Turbinenrad (10) angebracht ist, was über einen fest mit der Nabe (18) verbundenen Gegenkolben (31) und die Einspannung der fest mit der Kupplungsscheibe (62) verbundenen Reibbeläge zwischen dem Kolben (21) und dem Gegenkolben (31) erfolgt.

21. Verriegelbare Kupplung, die zwischen dem Gehäuse (2) und dem Turbinenrad (10) eines hydrodynamischen Getriebes, insbesondere für Kraftfahrzeuge, eingebaut ist , **dadurch gekennzeichnet**, daß sie einen Torsionsdämpfer nach Anspruch 15 umfaßt und daß das Zwischenstück (60) durch Schweißen (563, 663) am Turbinenrad (10) befestigt ist.

22. Verriegelbare Kupplung, die zwischen dem Gehäuse (2) und dem Turbinenrad (10) eines hydrodynamischen Getriebes, insbesondere für Kraftfahrzeuge, eingebaut ist , **dadurch gekennzeichnet**, daß sie einen Torsionsdämpfer nach einem der Ansprüche 1 bis 5 umfaßt, daß das Zwischenstück (60) durch Schweißen (563) am Turbinenrad (10) befestigt ist und daß die Führungsscheibe an einem Kolben (221) befestigt ist, der einen Reibbelag (24) zwischen sich und einer Schale (5) des Gehäuses (2) einspannen kann.

23. Verriegelbare Kupplung für ein hydrodynamisches Getriebe (1) zwischen einem treibenden Element (2) und einem getriebenen Element (18), insbesondere für Kraftfahrzeuge, bestehend aus einem Torsionsdämpfer (20) nach Anspruch 1, einem Kolben (21, 121), der im Verhältnis zu dem getriebenen Element (18) axial beweglich ist, wenigstens einem Reibbelag (24), der mit dem Kolben verbunden ist und zwischen dem besagten Kolben und einem Gegenkolben (31, 131) eingespannt werden kann , **dadurch gekennzeichnet**, daß der Eingangsteil (40) des Torsionsdämpfers (20) fest mit dem treibenden Element (2) verbunden werden kann, daß der Ausgangsteil (60) zwei Elemente umfaßt, und zwar ein Stützelement (61, 161, 261) für die Federn (50) und eine Kupplungsscheibe (62), die im Verhältnis zum Stützelement (61, 161, 261) axial beweglich und drehfest mit diesem verbunden ist, daß die Reibbeläge (24) beiderseits der besagten Kupplungsscheibe (62) angeordnet sind, daß die besagten Reibbeläge (24) zwischen dem Kolben (21) und dem drehfest mit dem getriebenen Element (18) verbundenen Gegenkolben (31) eingespannt werden können, daß der Kolben (21) im Verhältnis zum Gegenkolben (31, 131) axial beweglich gelagert und drehfest mit diesem verbunden ist, daß der besagte Kolben (21) beweglich an einer fest mit dem Gegenkolben (31) verbundenen Kolbenwelle (25) gelagert ist und daß das Stützelement (61) einen zum Gegenkolben (31, 131) gerichteten Anschlag (67) aufweist, um die Verschiebung der Kupplungsscheibe (62) zu begrenzen.

24. Kupplung nach Anspruch 23 , **dadurch gekennzeichnet,** daß die mit axialer Beweglichkeit wirksamen Drehverbindungsmittel (100, 101; 200) direkt zwischen dem Kolben (21, 121) und dem Gegenkolben (31, 131) zum Einsatz kommen.

25. Kupplung nach Anspruch 24 , **dadurch gekennzeichnet**, daß die besagten Drehverbindungsmittel aus Ausstülpungen (101) des Gegenkolbens (31), etwa Vertiefungen, bestehen, die in Einsenkungen (100) des Kolbens (21) eingreifen.

## Claims

1. A torsion damper for a lock-up clutch (4) adapted to work between the driving element (2) and the driven element (10) of a fluid coupling apparatus (1), comprising two coaxial parts (40, 60) which are movable with respect to each other against circumferentially acting springs (50), namely an input part having a guide ring (40) and an output part (60) having a damper plate, in which the guide ring (40) comprises a retaining portion (42, 142, ...) in the form of a half shell and engagement portions (45, 145, ...) for respectively retaining the springs (50) and engaging them, while the damper plate (60) also has engagement portions (65, 165, ...) for engagement with the springs (50), characterised in that the damper plate (60) has a retaining portion (61, 161, ...), for radially retaining the springs (50), being in the form of a half shell, in that the said engagement portions of the damper plate are carried by the said retaining portion of the damper plate, and in that the said retaining portions of the guide ring (40) and of the damper plate (60) are offset axially with respect to each other.

2. A damper according to Claim 1, characterised in that engagement portions (365, 565, 665, 765) of the damper plate (60) are formed in abutment knee portions of sinuous shape, extending from the inner periphery to the outer periphery of the retaining portion (361, 461, 561, 661, 761) of the damper plate (60).

3. A damper according to Claim 2, characterised in that the said knee portions are generally V-shaped.

4. A damper according to Claim 3, characterised in that the said engagement knee portions comprise an axially oriented portion joined through a rounded zone (369, 662) to an axially oriented peripheral annular flange (144, 368) of the said retaining portion, and in that the said axially oriented portion of the engagement knee portion (365, 565, 665, 765) is joined through a rounded portion to an inclined portion, which is itself joined to a rounded portion at the inner periphery of the said retaining portion.

5. A damper according to Claim 4, in which the guide ring (40) is interrupted locally by two series of lugs (46, 145) defining engagement surfaces for the said resilient members, with the lugs (46) of the second series extending axially below the lugs (145) of the first series which project from the retaining portion (42, 242) of the guide ring (40), characterised in that the lugs (145) of the first series are formed by inward deformation of material, and in that the said lugs (145) extend axially above the axially oriented portions of the engagement knee portions (365, 565, 665, 765) of the damper plate (60).

6. A damper according to any one of Claims 2 to 5, in which the resilient members (50) consist of coil springs, characterised in that at least some of the said coil springs (150, 153) bear at their circumferential ends on the engagement knee portions (365, 565, 665, 765) through thrust inserts (152).

7. A damper according to Claim 6, characterised in that some of the coil springs (151) are mounted for floating movement between two series of engagement knee portions (365, 565, 665, 765), being retained by retaining portions (42, 242; 361) of the guide ring (40) and of the damper plate (60).

8. A damper according to any one of Claims 1 to 7, characterised in that the retaining portion (242) of the guide ring (40) is embossed for retaining and positioning the resilient members (150, 153).

9. A damper according to Claim 8, in which the retaining portion (242) is extended by an axially oriented annular peripheral flange (348), characterised in that the embossed portion (343) is formed at the junction of the retaining portion (342) with the said flange (348).

10. A damper according to any one of Claims 1 to 9, in which the guide ring has at its outer periphery an axially oriented annular flange (143, 348), characterised in that the said flange (143, 348) is interrupted locally so as to define snap-fitting lugs (243) having a transverse flange (244) directed towards the axis of the assembly, and in that the said flange (244) is adapted to cooperate with the edge of a peripheral flange (143, 348) of the damper plate (60) so as to form a unitary assembly that can be handled and transported.

11. A damper according to Claim 10, characterised in that the said peripheral flange (348) of the damper plate (60) is slotted at the level of the snap-fitting lugs (243), so as to define an axially oriented peripheral flange (144) which is shorter than the said flange (348).

12. A damper according to Claim 10, characterised in that a ring (95), associated with at least one friction liner (195), is interposed between the flange (244) of the snap-fitting lugs and the outer periphery of the retaining portion (361) of the damper plate (60).

13. A damper according to Claim 12, characterised in that the outer periphery (461) of the said retaining portion (361) is mostly oriented transversely for cooperation with the said friction liner or liners (195).

14. A damper according to any one of Claims 1 to 13, characterised in that one of the elements consisting of the guide ring (40) and the damper plate (60) is coupled in rotation to a disc (62) through a coupling of the tenon and mortice type, with the said disc (62) being adapted to be gripped between a piston (21, 121, 231, 321, 421) and a counter piston (5, 31).

15. A damper according to Claim 14, in which the guide ring (40) has a transverse portion (341), characterised in that the said transverse portion (341) is extended at its inner periphery by an axially oriented flange (342) which is pierced, so as to define mortices (380) and for the fitting of a disc (62) having at its outer periphery tenons (167) which mesh with the said apertures (380).

16. A damper according to Claim 14, in which the guide ring has a transverse portion (341), characterised in that the said transverse portion (341) has, at its inner periphery, notches (480) into which there penetrate axially oriented lugs (267) defined on the said disc (62) at its outer periphery.

17. A damper according to Claim 14, characterised in that the retaining portion (61, 361) of the damper plate (60) has mortices (380) for the fitting of the disc (62), which has at its outer periphery tenons (167) which mesh with the said mortices.

18. A damper according to Claim 17, characterised in that the mortices (64, 164) consist of slots, each of which is closed by a shoulder (67) adapted to limit the displacements of the disc (62) by cooperation with the appropriate tenon (167) of the latter.

19. A lock-up clutch adapted to work between the casing (2) and the turbine wheel (10) of a fluid coupling apparatus, especially for a motor vehicle, being of the kind comprising a piston (21) which is oriented generally transversely, characterised in that it includes a torsion damper according to any one of Claims 1 to 13, and in that the guide ring (40) is fixed to the said piston (20), which is adapted to grip a friction liner (24) between the latter and a shell member (5) which is part of the casing (2) of the fluid coupling apparatus.

20. A lock-up clutch fitted between the casing (2) and the turbine wheel (10) of a fluid coupling apparatus, especially for a. motor vehicle, being of the kind comprising a piston (21) which is oriented generally transversely, characterised in that it includes a torsion damper according to Claim 17, in that the guide ring (40) is fixed to a shell member (5) of that casing (2) of the fluid coupling apparatus, and in that the damper plate (60) is mounted releasably in rotation on a hub (18), which is fixed with respect to the turbine wheel (10) through a counter piston (31) that is fixed with respect to the hub (18), and for the gripping of friction liners in fixed relationship with the disc (62), between the piston (21) and the counter piston (31).

21. A lock-up clutch fitted between the casing (2) and the turbine wheel (10) of a fluid coupling apparatus, especially for a motor vehicle, characterised in that it includes a torsion damper according to Claim 15, and in that the damper plate (60) is secured by welding (563, 663) to the turbine wheel (10).

22. A lock-up clutch fitted between the casing (2) and the turbine wheel (10) of a fluid coupling apparatus, especially for a motor vehicle, characterised in that it includes a torsion damper according to anyone of Claims 1 to 5, in that the damper plate (60) is fixed by welding (563) to the turbine wheel (10), and in that the guide ring is fixed to a piston (221) which is adapted to grip a friction liner (24) between the latter and the shell member (5) of the casing (2).

23. A lock-up clutch, for a fluid coupling apparatus (1) between a driving element (2) and a driven element (18), in particular for a motor vehicle, and comprising a torsion damper (20) according to Claim 1, a piston (21, 121) mounted for axial movement with respect to the driving element (18), at least one friction liner (24) associated with the piston and adapted to be gripped between the said piston and a counter piston (31, 131), characterised in that the input part (40) of the torsion damper (20) is adapted to be put into fixed relationship with the driving element (2), in that the output part (60) comprises two elements, namely a support element (61, 161, 261) for the springs (50) and a disc (62) which is movable axially with respect to the support element (61, 161, 261), being coupled in rotation with the latter, in that friction liners (24) are disposed on either side of the said disc (62), in that the said friction liners (24) are adapted to be gripped between the piston (21) and the counter piston (31), which is fixed with respect to the driven element (18) for rotation with it, in that the piston (21) is mounted for axial movement with respect to the counter piston (31, 131), being coupled in rotation to the latter, in that the said piston (21) is mounted for movement on a piston shaft (25) which is fixed to the counter piston (31), and in that the support element (61) has an abutment (67) facing towards the counter piston (31, 131) in order to limit the displacement of the disc (62).

24. A clutch according to Claim 23, characterised in that rotational coupling means (100, 101; 200), permitting axial movement, work directly between the piston (21, 121) and the counter piston (31, 131).

25. A clutch according to Claim 24, characterised in that the said rotational coupling means comprise protuberances (101) of the counter piston (31), for example embossed portions, which engage in recesses (100) of the piston (21).
